# EUROPEAN PATENT APPLICATION

(11) **EP 4 615 097 A1**
(43) Date of publication of application: **10.09.2025**
(21) Application number: 23884537.4
(22) Date of filing: 07.10.2023
(51) Int. Cl.: H04W 72/0446, H04W 72/12

(54) **DATA TRANSMISSION METHODS, DEVICE, AND STORAGE MEDIUM**

(30) Priority: 31.10.2022 CN 202211351442
(71) Applicant: ZTE Corporation, Shenzhen, Guangdong 518057 (CN)
(72) Inventor: LI, Yan, Shenzhen, Guangdong 518057 (CN)
(74) Representative: Aipex B.V.
(86) International application number: PCT/CN2023/123127
(87) International publication number: WO 2024/093605

(57) **Abstract**

Provided are a data transmission method, a device, and a storage medium. A data transmission method applied to a first communication node includes for each of at least one second communication node, sending (S310) an allocation duration to the second communication node to enable the second communication node to perform a data transmission within the allocation duration, where the allocation duration is a subset of a pre-received transmission opportunity duration.

## Description

This application claims priority to Chinese Patent Application No. 202211351442.1 filed with the China National Intellectual Property Administration (CNIPA) on Oct. 31, 2022, the disclosure of which is incorporated herein by reference in its entirety.

### TECHNICAL FIELD

The present application relates to the field of communications, for example, a data transmission method, a device, and a storage medium.

### BACKGROUND

With the improvement of the material living standards, the deployment of multiple access points (APs) in a home environment becomes increasingly popular, and the types and number of user access devices also gradually increase (for example, a mobile phone, a tablet, a television, and a smart speaker). Meanwhile, with the development of technologies and applications such as extended reality (XR), cloud virtual reality (VR), and remote work, increasingly high latency requirements are imposed on Wireless Fidelity (Wi-Fi) networks. Therefore, the transmission of latency sensitive traffic in a multi-AP dense scenario is an important direction to be considered in the deployment of multiple APs in a home network in the future. However, the Enhanced Distributed Channel Access (EDCA) mode and low latency technology commonly used in Wi-Fi are limited to a single base station subsystem (BSS) and cannot be used to manage and control a particular data transmission of a particular AP in a multi-AP system. Therefore, a mechanism is urgently needed to control air interface transmissions of the multiple APs.

### SUMMARY

In view of this, embodiments of the present application provide a data transmission method, a device, and a storage medium, effectively improving the low latency transmission capability of a second communication node.

An embodiment of the present application provides a data transmission method applied to a first communication node. The data transmission method includes the following.

For each of at least one second communication node, an allocation duration is sent to the second communication node to enable the second communication node to perform a data transmission within the allocation duration, where the allocation duration is a subset of a pre-received transmission opportunity (TXOP) duration.

An embodiment of the present application provides a data transmission method applied to a second communication node. The data transmission method includes the following.

An allocation duration is received from a first communication node, where the allocation duration is obtained by the first communication node by dividing a transmission opportunity (TXOP) duration according to uplink and downlink relevant information.

A data transmission is performed within the allocation duration.

An embodiment of the present application provides a communication device. The communication device includes a memory and at least one processor.

The memory is configured to store at least one program.

The at least one program, when executed by the at least one processor, causes the at least one processor to perform the data transmission method of any previous embodiment.

An embodiment of the present application provides a storage medium having a computer program stored therein, where the computer program, when executed by a processor, causes the processor to perform the data transmission method of any previous embodiment.

### BRIEF DESCRIPTION OF DRAWINGS

FIG. 1 is a diagram illustrating an implementation of a triggered TXOP sharing procedure in the related art.
FIG. 2 is a diagram illustrating an implementation of a distributed TXOP sharing (D-TXS) group establishment process according to an embodiment of the present application.
FIG. 3 is a flowchart of a data transmission method according to an embodiment of the present application.
FIG. 4 is a flowchart of another data transmission method according to an embodiment of the present application.
FIG. 5 is a diagram illustrating an implementation of a D-TXS procedure according to an embodiment of the present application.
FIG. 6 is a diagram illustrating a configuration of a frame structure of a TXOP sharing information collection request message according to an embodiment of the present application.
FIG. 7 is a diagram illustrating a configuration of a frame structure of a TXOP sharing information collection response message according to an embodiment of the present application.
FIG. 8 is a diagram illustrating another configuration of a frame structure of a TXOP sharing information collection request message according to an embodiment of the present application.
FIG. 9 is a diagram illustrating another configuration of a frame structure of a TXOP sharing information collection response message according to an embodiment of the present application.
FIG. 10 is a diagram illustrating a configuration of a frame structure of a TXOP sharing notification according to an embodiment of the present application.
FIG. 11 is a diagram illustrating a configuration of a frame structure of a TXOP duration allocation message according to an embodiment of the present application.
FIG. 12 is a diagram illustrating a configuration of a structure of a TXOP sharing trigger frame according to an embodiment of the present application.
FIG. 13 is a diagram illustrating another configuration of a structure of a TXOP sharing trigger frame according to an embodiment of the present application.
FIG. 14 is a diagram illustrating another configuration of a structure of a TXOP sharing trigger frame according to an embodiment of the present application.
FIG. 15 is a diagram illustrating reporting of node-related information according to an embodiment of the present application.
FIG. 16 is another diagram illustrating reporting of node-related information according to an embodiment of the present application.
FIG. 17 is a diagram illustrating transmissions of a D-TXS information collection request message and D-TXS information collection response messages according to an embodiment of the present application.
FIG. 18 is another diagram illustrating transmissions of a D-TXS information collection request message and D-TXS information collection response messages according to an embodiment of the present application.
FIG. 19 is a diagram illustrating an implementation of TXOP sharing according to an embodiment of the present application.
FIG. 20 is a diagram illustrating another implementation of TXOP sharing according to an embodiment of the present application.
FIG. 21 is a diagram illustrating an implementation of a D-TXS transmission phase according to an embodiment of the present application.
FIG. 22 is a diagram illustrating another implementation of a D-TXS transmission phase according to an embodiment of the present application.
FIG. 23 is a diagram illustrating another implementation of a D-TXS transmission phase according to an embodiment of the present application.
FIG. 24 is a diagram illustrating another implementation of a D-TXS transmission phase according to an embodiment of the present application.
FIG. 25 is a diagram illustrating another implementation of a D-TXS transmission phase according to an embodiment of the present application.
FIG. 26 is a diagram illustrating another implementation of a D-TXS transmission phase according to an embodiment of the present application.
FIG. 27 is a diagram illustrating another implementation of a D-TXS transmission phase according to an embodiment of the present application.
FIG. 28 is a diagram illustrating another implementation of a D-TXS transmission phase according to an embodiment of the present application.
FIG. 29 is a diagram illustrating another implementation of a D-TXS transmission phase according to an embodiment of the present application.
FIG. 30 is a diagram illustrating an implementation of a transmission manner in a D-TXS Info Collection phase and a D-TXS Schedule phase according to an embodiment of the present application.
FIG. 31 is a diagram illustrating another implementation of a transmission manner in a D-TXS Info Collection phase and a D-TXS Schedule phase according to an embodiment of the present application.
FIG. 32 is a diagram illustrating another implementation of a transmission manner in a D-TXS Info Collection phase and a D-TXS Schedule phase according to an embodiment of the present application.
FIG. 33 is a block diagram of a data transmission apparatus according to an embodiment of the present application.
FIG. 34 is a block diagram of another data transmission apparatus according to an embodiment of the present application.
FIG. 35 is a structural diagram of a communication device according to an embodiment of the present application.

### DETAILED DESCRIPTION

Embodiments of the present application are described hereinafter in conjunction with drawings. The present application is described hereinafter in conjunction with embodiments and the drawings. The examples described hereinafter are intended to explain the present application and not to limit the scope of the present application.

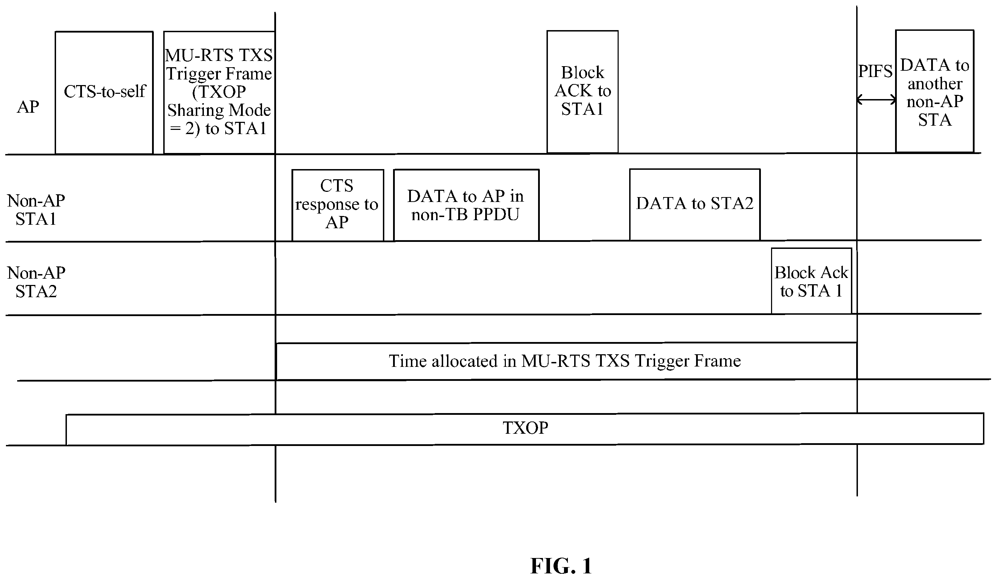

FIG. 1 is a diagram illustrating an implementation of a triggered TXOP sharing procedure in the related art. As shown in FIG. 1, the triggered TXOP sharing procedure includes the following.

An AP succeeds in contending for a TXOP and sends CTS-to-self to prevent an effect of a hidden node. The AP then sends a multi-user request-to-send TXOP sharing (MU-RTS TXS) Trigger Frame and allocates an allocation duration to STAtion1 (STA1). STA1 replies with CTS to indicate that STA1 successfully occupies the TXOP for transmission.

Then, STA1 performs an uplink transmission with the AP and a peer-to-peer (P2P) transmission with STA2 within the allocation duration.

Finally, after the allocation duration expires, STA1 stops the transmission, and the AP reoccupies the TXOP for transmission.

In the scenario where multiple APs are managed through the laying of optical fibers to remote nodes (that is, fiber to the room (FTTR)) in a home environment, the present application provides the D-TXS technology where the communication and management of multiple APs are implemented by a central controller. When an AP in a multi-AP system succeeds in contending for a TXOP, the AP allocates one or more periods in the TXOP (that is, a TXOP duration) to one or more other APs in the multi-AP system that need to transmit latency sensitive traffic, thereby improving the overall low latency transmission capability of the multi-AP system.

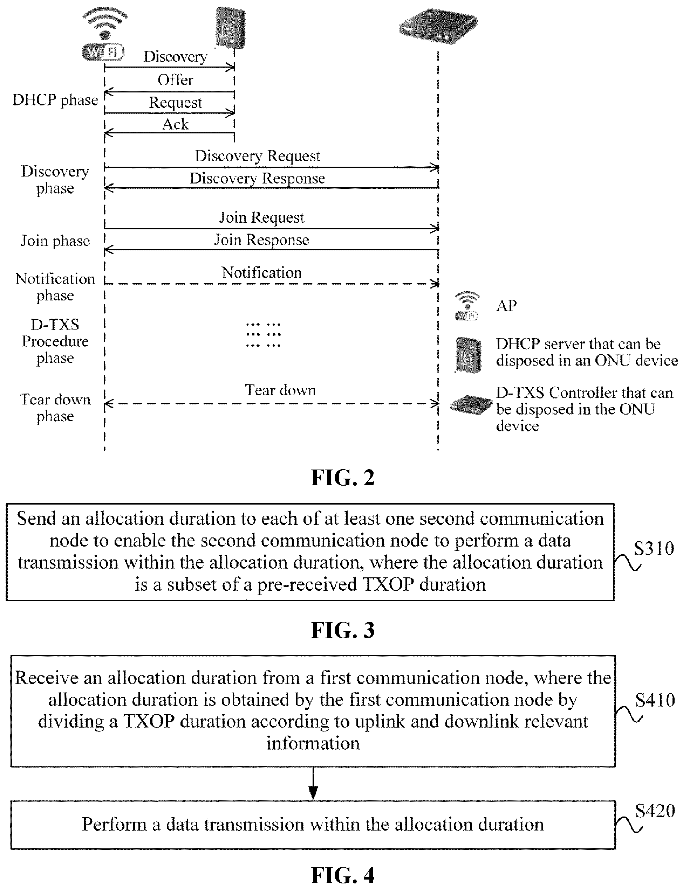

FIG. 2 is a diagram illustrating an implementation of a D-TXS group establishment process according to an embodiment of the present application. As shown in FIG. 2, the D-TXS group establishment process in the present application includes a Dynamic Host Configuration Protocol (DHCP) phase, a Discovery phase, a Join phase, a Notification phase, a D-TXS Procedure phase, and a Tear down phase.

In the DHCP phase, an AP registers with a DHCP server through the media access control (MAC) of the AP and acquires an Internet Protocol (IP) address for subsequent communication.

In the Discovery phase, the AP and a D-TXS Controller label controller and agent role information and D-TXS support capabilities in messages and discover each other through the discovery mechanism to prepare for the subsequent group establishment.

In the Join phase, the AP transmits an operation category, channel, bandwidth, and the like of the AP to the D-TXS Controller, and the D-TXS Controller determines whether to add the AP into a D-TXS group.

In the Notification phase, in response to a change in the operation category, channel, bandwidth, and the like of the AP, the AP sends a notification to the D-TXS Controller.

The D-TXS Procedure phase includes a D-TXS information collection phase, a D-TXS schedule phase, and a D-TXS transmission phase.

In the Tear down phase, both the AP and the D-TXS Controller can actively initiate the exit of the AP from the D-TXS group.

It is to be noted that the three phases in the D-TXS Procedure phase, that is, the D-TXS information collection phase, the D-TXS schedule phase, and the D-TXS transmission phase, are mainly described in the embodiments of the present application.

In an embodiment, FIG. 3 is a flowchart of a data transmission method according to an embodiment of the present application. This embodiment is applicable to the case where multiple APs in a multi-AP system need to transmit latency sensitive traffic. This embodiment may be implemented by a first communication node. For example, the first communication node refers to a D-TXS controller. The D-TXS controller may be a physical device or a logical unit. Being the logical unit, the D-TXS controller is integrated into another physical device (such as an AP).

In an embodiment, in the case where the D-TXS controller is integrated into the AP as the logical unit, the first communication node may include a physical layer in addition to the D-TXS controller used as the logical unit. Accordingly, a second communication node may be another AP in a TXOP sharing group.

As shown in FIG. 3, this embodiment includes S310.

In S310, for each of at least one second communication node, an allocation duration is sent to the second communication node to enable the second communication node to perform a data transmission within the allocation duration, where the allocation duration is a subset of a pre-received TXOP duration.

The TXOP duration refers to a total duration preempted by one second communication node by successfully contending for channel access and acquiring a TXOP. In an embodiment, a sum of allocation durations corresponding to all second communication nodes is the TXOP duration. For example, the second communication node may be an AP. In this embodiment, an allocation duration corresponding to a second communication node refers to a duration within which the second communication node transmits latency sensitive traffic within the allocation duration. In this embodiment, the allocation duration corresponding to each second communication node is positively correlated to the volume of latency sensitive traffic to be transmitted by the second communication node. That is, in the case where the volume of latency sensitive traffic to be transmitted by the second communication node is relatively large, the first communication node may allocate a relatively long allocation duration to the second communication node; in the case where the volume of latency sensitive traffic to be transmitted by the second communication node is relatively small, the first communication node may allocate a relatively short allocation duration to the second communication node.

In this embodiment, for each second communication node that needs to transmit latency sensitive traffic, after acquiring the TXOP duration, the first communication node divides the TXOP duration into multiple allocation durations and sends an allocation duration (which corresponds to the second communication node) to the second communication node to enable the second communication node transmit the latency sensitive traffic within the allocation duration, thereby improving the overall low latency transmission capability of the multi-AP system.

In an embodiment, the data transmission method applied to the first communication node further includes: in response to a received TXOP sharing notification carrying the TXOP duration, dividing the TXOP duration into at least one allocation duration according to uplink and downlink relevant information. In this embodiment, the TXOP sharing notification refers to a notification of successful contention for channel access. In this embodiment, in the case where one second communication node successfully contends for channel access and acquires the TXOP, the second communication node sends the TXOP sharing notification to the first communication node to notify the first communication node of the successful contention for channel access; and for each second communication node, the first communication node divides the TXOP duration into one or more allocation durations according to the uplink and downlink relevant information and sends the allocation duration (which corresponds to the second communication node) to the second communication node so that the second communication node can perform a low latency transmission within the allocation duration.

In an embodiment, before the response to the received TXOP sharing notification carrying the TXOP duration, the data transmission method applied to the first communication node further includes the following.

A TXOP sharing information collection request message is sent to each second communication node in the TXOP sharing group.

A TXOP sharing information collection response message carrying node-related information is received from the second communication node.

The TXOP sharing group refers to a group consisting of other second communication nodes that can share the TXOP with the second communication node in the case where the second communication node succeeds in contending for the TXOP. In this embodiment, the TXOP sharing information collection request message is used for requesting each second communication node in the TXOP sharing group to feed back the node-related information of the second communication node; and the TXOP sharing information collection response message is used for carrying the node-related information. In this embodiment, the first communication node actively broadcasts or unicasts the TXOP sharing information collection request message to request the respective node-related information from each second communication node in the TXOP sharing group. In the case where the second communication node receives the TXOP sharing information collection request message, the second communication node reports the node-related information to the first communication node by carrying the node-related information in the TXOP sharing information collection response message.

In an embodiment, the uplink and downlink relevant information includes at least one of downlink relevant information or the node-related information.

The downlink relevant information includes at least one of downlink buffer information, priority information, low latency information, or bandwidth information.

The node-related information includes at least one of uplink buffer information, priority information, low latency information, or neighbor information.

In an embodiment, the uplink and downlink relevant information includes relevant information in a downlink direction and relevant information in an uplink direction. It is to be understood that the downlink relevant information refers to the relevant information in the downlink direction; and the node-related information refers to the relevant information in the uplink direction. The downlink relevant information includes, but is not limited to, one of the downlink buffer information, the priority information, the low latency information, or the bandwidth information, which can be maintained by the first communication node. The downlink buffer information refers to a volume of low latency traffic buffered by the second communication node (that is, a volume of low latency traffic transmitted from an access network or a core network to the second communication node and then transmitted by the second communication node to another STA). The bandwidth information refers to an occupied bandwidth resource.

In this embodiment, the uplink buffer information may be understood as a volume of low latency traffic among traffic to be reported by the second communication node (that is, a volume of low latency traffic transmitted to the second communication node by one or more STAs). The priority information is used to indicate whether the low latency information exists in the traffic to be reported. The low latency information is used to indicate the low latency traffic included in the traffic to be reported. The neighbor information is used to indicate whether communication interference from a neighbor AP exists. For example, if AP1 has relatively many neighbor APs on sub-band 1, other sub-bands than sub-band 1 may be allocated to AP1, to avoid communication interference from other APs.

In an embodiment, the node-related information is reported explicitly or implicitly. In an embodiment, in the case where the second communication node explicitly reports the node-related information, the first communication node sends the TXOP sharing information collection request message to trigger each second communication node in the TXOP sharing group to feed back the TXOP sharing information collection response message carrying the node-related information. In an embodiment, in the case where the second communication node implicitly reports the node-related information, the first communication node indicates a period of the subsequent reporting of the node-related information in the TXOP sharing information collection request message sent for the first time, and each second communication node in the TXOP sharing group periodically and actively sends the TXOP sharing information collection response message in the subsequent process to report the node-related information.

In an embodiment, a frame structure of the TXOP sharing information collection request message includes at least one of a buffer status presence field, a priority information presence field, or a low latency information presence field. In this embodiment, at least one of the buffer status presence field, the priority information presence field, or the low latency information presence field is configured in the frame structure of the TXOP sharing information collection request message. In the case where the buffer status presence field, the priority information presence field, and the low latency information presence field are set to 1, it indicates that a receiving end (for example, the second communication node) is requested to report relevant information corresponding to the receiving end (including the priority information, the low latency information, and one of the uplink buffer information and the downlink buffer information). In the case where the buffer status presence field, the priority information presence field, and the low latency information presence field are set to 0, it indicates that the receiving end (for example, the second communication node) is not requested to report the relevant information corresponding to the receiving end.

In an embodiment, a frame structure of the TXOP sharing information collection response message includes the buffer status presence field, the priority information presence field, and the low latency information presence field.

The frame structure of the TXOP sharing information collection response message further includes one of a buffer status field, a priority information field, or a low latency information field. In this embodiment, the buffer status presence field, the priority information presence field, and the low latency information presence field in the TXOP sharing information collection response message are consistent with the buffer status presence field, the priority information presence field, and the low latency information presence field in the TXOP sharing information collection request message. In the case where the buffer status presence field is set to 1, the TXOP sharing information collection response message includes the buffer status field, and the buffer status field includes the uplink buffer information. In the case where the priority information presence field is set to 1, the TXOP sharing information collection response message includes the priority information field, and the priority information field includes uplink priority information. In the case where the priority information presence field is set to 0, the TXOP sharing information collection response message does not include the priority information field. In the case where the low latency information presence field is set to 1, the TXOP sharing information collection response message includes the low latency information field, and the low latency information field includes the low latency information. In the case where the low latency information presence field is set to 0, the TXOP sharing information collection response message does not include the low latency information field.

In an embodiment, the frame structure of the TXOP sharing information collection request message includes at least one allocation duration preference presence field. In this embodiment, the second communication node may only report a preferred resource allocation of the second communication node, such as an expected transmission time. In an embodiment, the at least one allocation duration preference presence field may be configured in the frame structure of the TXOP sharing information collection request message. In the case where the allocation duration preference presence field is set to 1, it indicates that the second communication node is requested to preferentially report the preferred resource allocation. In the case where the allocation duration preference presence field is set to 0, it indicates that the second communication node is not requested to preferentially report the preferred resource allocation.

In an embodiment, the frame structure of the TXOP sharing information collection response message includes the allocation duration preference presence field.

The frame structure of the TXOP sharing information collection response message further includes an allocation duration field. In this embodiment, the allocation duration preference presence field in the TXOP sharing information collection response message is consistent with the allocation duration preference presence field in the TXOP sharing information collection request message. In the case where the allocation duration preference presence field is set to 1, the TXOP sharing information collection response message includes the allocation duration field. On the contrary, in the case where the allocation duration preference presence field is set to 0, the TXOP sharing information collection response message does not include the allocation duration field. In an embodiment, the number of allocation duration preference presence fields included in the TXOP sharing information collection request message may be the same as the number of allocation duration preference presence fields included in the TXOP sharing information collection response message. For example, in the case where the TXOP sharing information collection response message includes three allocation duration preference presence fields and each allocation duration preference presence field is set to 1, the TXOP sharing information collection response message includes three allocation duration fields, the first allocation duration field includes a preferred resource allocation with a highest priority, the second allocation duration field includes a preferred resource allocation with a second highest priority, and the third allocation duration field includes a preferred resource allocation with a low priority.

In an embodiment, the TXOP sharing notification further carries time stamp information and channel bandwidth information. In this embodiment, the time stamp information indicates a time point when the contention for channel access succeeds and the TXOP is acquired, and the channel bandwidth information indicates bandwidth information (including, but not limited to, frequency band information and a frequency band bandwidth) of the acquired TXOP.

In an embodiment, a frame structure of the TXOP sharing notification includes a time stamp field, a channel bandwidth field, and a TXOP duration field. In this embodiment, the time stamp field is used to include the time stamp information; the channel bandwidth field is used to include the bandwidth information of the acquired TXOP; and the TXOP duration field is used to include a total duration of the acquired TXOP.

In an embodiment, a message carrying the allocation duration includes a TXOP duration allocation message. In this embodiment, for each second communication node in the TXOP sharing group, after the first communication node divides the received TXOP duration into the at least one allocation duration, the first communication node allocates an allocation duration (which corresponds to the second communication node) to the second communication node in the TXOP sharing group through the TXOP duration allocation message so that the second communication node can perform the low latency transmission within the allocation duration.

In an embodiment, a frame structure of the TXOP duration allocation message includes the time stamp field, the channel bandwidth field, and a resource allocation field.

The resource allocation field includes a node identifier field and an allocation duration field. In this embodiment, the specific explanations of the time stamp field, the channel bandwidth field, and the resource allocation field included in the TXOP duration allocation message are the same as the explanations of the corresponding parameters described above. For specific explanations, see the description of the corresponding parameters in the preceding embodiments, and the details are not repeated here. In this embodiment, the frame structure of the TXOP duration allocation message may include one resource allocation field or may include at least two resource allocation fields. Each resource allocation field includes the node identifier field and the allocation duration field, where the node identifier field is used to indicate a different second communication node in the TXOP sharing group, and the allocation duration field is used to indicate the allocation duration for each second communication node.

In an embodiment, FIG. 4 is a flowchart of another data transmission method according to an embodiment of the present application. This embodiment may be implemented by a second communication node. For example, the second communication node refers to an AP. As shown in FIG. 4, this embodiment includes S410 and S420.

In S410, an allocation duration obtained is received from a first communication node, where the allocation duration is obtained by the first communication node by dividing a transmission opportunity (TXOP) duration according to uplink and downlink relevant information.

In S420, a data transmission is performed within the allocation duration.

In this embodiment, for each second communication node that needs to transmit latency sensitive traffic, after receiving the TXOP duration, the first communication node divides the TXOP duration into at least one allocation duration according to the uplink and downlink relevant information and sends an allocation duration (which corresponds to the second communication node) to the second communication node so that the second communication node transmits the latency sensitive traffic within the allocation duration, thereby improving the overall low latency transmission capability of a multi-AP system.

In an embodiment, before the allocation duration is received from the first communication node, the data transmission method applied to the second communication node further includes the following.

A TXOP sharing information collection request message is received from the first communication node.

A TXOP sharing information collection response message carrying node-related information is sent to the first communication node.

In an embodiment, in the case where a D-TXS controller is integrated into the AP as a logical unit, the first communication node may include a physical layer in addition to the D-TXS controller used as the logical unit (an upper layer of the physical layer). The AP integrated with the D-TXS controller is an AP that successfully contends for channel access and acquires a TXOP. In this embodiment, before another AP receives the allocation duration obtained by the D-TXS controller in the AP (that is, the first communication node) by dividing the TXOP duration according to the uplink and downlink relevant information, another AP further receives the TXOP sharing information collection request message from the D-TXS controller in the first communication node and sends the TXOP sharing information collection response message carrying the node-related information to the D-TXS controller in the first communication node.

In an embodiment, the second communication node is a first-type communication node, where the first-type communication node is a communication node that successfully contends for channel access and acquires the TXOP; and before the allocation duration is received from the first communication node, the data transmission method applied to the second communication node further includes sending a TXOP sharing notification carrying the TXOP duration to the first communication node.

In an embodiment, in the case where the D-TXS controller is integrated into the AP as the logical unit, the first communication node may include the physical layer in addition to the D-TXS controller used as the logical unit (the upper layer of the physical layer). The AP integrated with the D-TXS controller is the AP that successfully contends for channel access and acquires the TXOP. In an embodiment, the physical layer in the first communication node may send the TXOP sharing notification carrying the TXOP duration to the D-TXS controller in the first communication node. In an embodiment, the second communication node is the first-type communication node; and that the data transmission is performed within the allocation duration includes that the first-type communication node instructs, through a TXOP sharing trigger frame, a second-type communication node to perform a data transmission within an allocation duration corresponding to the second-type communication node, where the second-type communication node is a communication node other than the first-type communication node in a TXOP sharing group. In this embodiment, the TXOP sharing trigger frame is used to instruct the second-type communication node in the TXOP sharing group to perform a low latency transmission.

In an embodiment, the second communication node is the first-type communication node; and that the data transmission is performed within the allocation duration includes the following. After the allocation duration of the second-type communication node ends, the first-type communication node continues the data transmission until the TXOP duration ends.

Alternatively, after the allocation duration of the second-type communication node ends, the first-type communication node terminates TXOP sharing at an end of the allocation duration. In this embodiment, after allocation durations of all second-type communication nodes end, the first-type communication node may choose to continue the transmission until the end of the TXOP duration or may choose to terminate the TXOP in advance, that is, terminate the TXOP sharing at the end of the last allocation duration.

In an embodiment, a structure of the TXOP sharing trigger frame includes at least one of a resource unit allocation field, a basic service set identifier field, an allocation duration field, or a channel bandwidth field, where the basic service set identifier field is used to indicate a basic service set identifier of the second-type communication node.

In an embodiment, the structure of the TXOP sharing trigger frame includes the basic service set identifier field, where the basic service set identifier field is used to indicate the basic service set identifier of the second-type communication node. In this embodiment, the TXOP sharing trigger frame may carry at least one basic service set identifier field, and the basic service set identifier of the second-type communication node is indicated in the basic service set identifier field. The basic service set identifier identifies that the second-type communication node can occupy the TXOP to perform the low latency transmission.

In an embodiment, the structure of the TXOP sharing trigger frame includes the basic service set identifier field, the allocation duration field, and the channel bandwidth field, where the basic service set identifier field is used to indicate the basic service set identifier of the second-type communication node.

In an embodiment, the structure of the TXOP sharing trigger frame includes the resource unit allocation field, the basic service set identifier field, and the allocation duration field, where the basic service set identifier field is used to indicate the basic service set identifier of the second-type communication node. In this embodiment, the resource unit allocation field is used to identify operating channel bandwidth information of the TXOP. In an embodiment, the structure of the TXOP sharing trigger frame includes the resource unit allocation field, the basic service set identifier field, and the allocation duration field and may further include an association identifier (AID), where the AID indicates the allocation to another second communication node which may be determined by the basic service set identifier field.

It is to be noted that for the explanations of parameters such as the TXOP duration, the allocation duration, the TXOP sharing information collection request message, the TXOP sharing information collection response message, and the TXOP sharing notification in the embodiments of the data transmission method applied to the second communication node, see the description of the corresponding parameters in the preceding embodiments of the data transmission method applied to the first communication node, and the details are not repeated here.

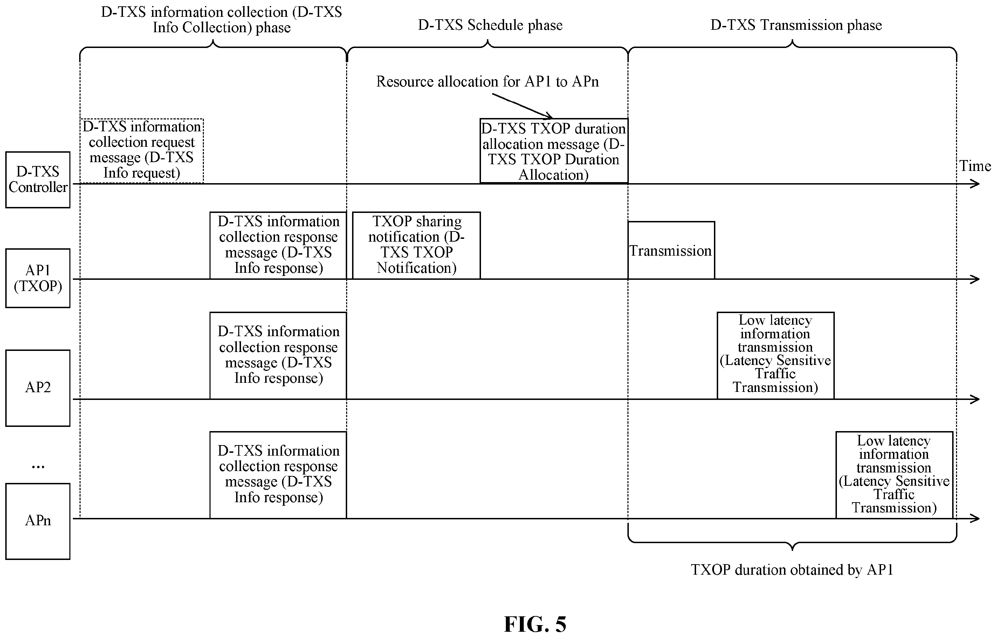

In an embodiment, FIG. 5 is a diagram illustrating an implementation of a D-TXS procedure according to an embodiment of the present application. In this embodiment, the implementation of the D-TXS procedure is described by using an example in which a first communication node is a D-TXS Controller and a second communication node is an AP. As shown in FIG. 5, the D-TXS procedure in this embodiment includes a D-TXS information collection phase (also referred to as a D-TXS Info Collection phase), a D-TXS Schedule phase, and a D-TXS Transmission phase.

The first phase, the D-TXS Info Collection phase, includes the following.

In 1, the D-TXS Controller actively sends a broadcasted or unicasted TXOP sharing information collection request message (D-TXS Info request) to request each AP in a TXOP sharing group (D-TXS group) to feed back node-related information (D-TXS Info). In this embodiment, the node-related information includes, but is not limited to, uplink buffer information, priority information, low latency information, and neighbor information.

In 2, each AP feeds back a TXOP sharing information collection response message (D-TXS Info response) according to the received D-TXS Info request to report the node-related information to the D-TXS Controller. In this embodiment, the node-related information includes, but is not limited to, the uplink buffer information, the priority information, the low latency information, and the neighbor information.

In an embodiment, the D-TXS Info may be reported in the two manners below.

### Manner one: Explicit reporting

The D-TXS Controller sends the D-TXS Info request to trigger each AP to feed back the D-TXS Info response.

### Manner two: Implicit reporting

The D-TXS Controller indicates a period of the subsequent reporting of the D-TXS Info in the first D-TXS Info request, and subsequently, each AP periodically and actively sends the D-TXS Info response to complete information reporting.

The second phase, the D-TXS Schedule phase, includes the following.

In 1, an AP (for example, AP1) that successfully contends for channel access and acquires a TXOP actively sends a TXOP sharing notification (D-TXS TXOP Notification) to the D-TXS Controller to notify the D-TXS Controller of successful contention for channel access. Information carried in the D-TXS TXOP Notification includes, but is not limited to, time stamp information, a TXOP duration (TXOP Duration), and channel bandwidth information.

In 2, according to a Resource Allocation basis, the D-TXS Controller determines to divide the TXOP duration into one or more allocation durations and notifies each AP of a respective allocated allocation duration through a TXOP duration allocation message (D-TXS TXOP Duration Allocation) for the AP to subsequently perform a low latency transmission. Information carried in the D-TXS TXOP Duration Allocation message includes, but is not limited to, the time stamp information, the channel bandwidth information, and the allocation duration.

The third phase, the D-TXS Transmission phase, includes the following.

In 1, the AP (for example, AP1) that successfully contends for channel access and acquires the TXOP instructs another AP to perform the transmission within the allocated allocation duration.

In 2, after the allocated allocation duration expires, the original AP (that is, the AP (for example, AP1) that successfully contends for channel access and acquires the TXOP) may choose to continue the transmission until the TXOP expires or choose to terminate the TXOP in advance.

In an embodiment, a Resource Allocation determination criterion includes that a Resource Allocation is used for the D-TXS Controller to send corresponding allocation durations to one or more other APs for low latency transmissions. A basis of the Resource Allocation determination criterion includes one or more of uplink and downlink relevant information (that is, downlink relevant information or uplink relevant information).

In a downlink direction, the downlink relevant information includes, but is not limited to, downlink buffer information, priority information, low latency information, and bandwidth information, which can be maintained by the D-TXS Controller.

In an uplink direction, the uplink relevant information includes, but is not limited to, the uplink buffer information, the priority information, the low latency information, and the neighbor information, which are reported by each AP.

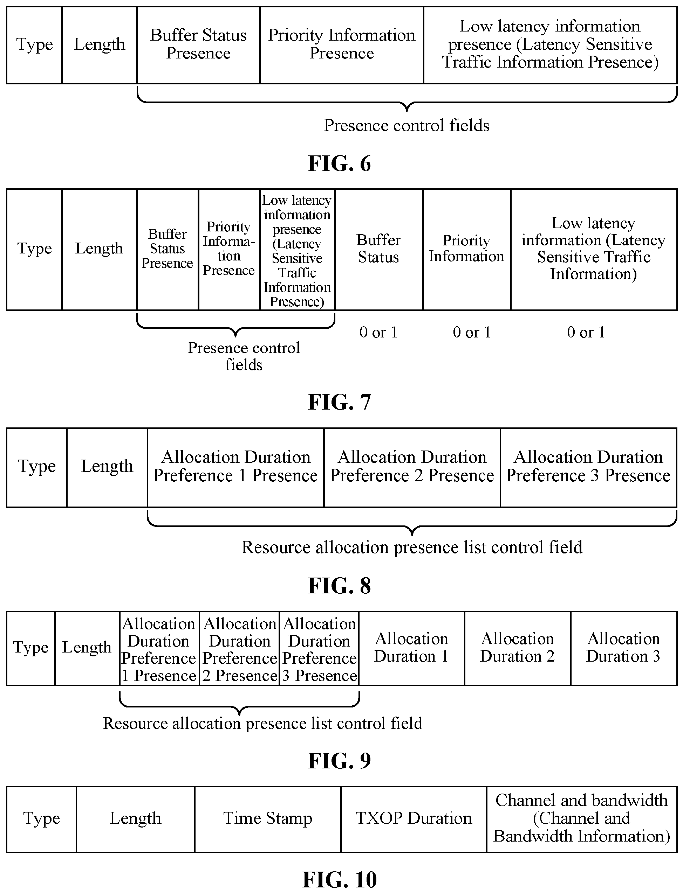

In an embodiment, FIG. 6 is a diagram illustrating a configuration of a frame structure of a TXOP sharing information collection request message according to an embodiment of the present application. As shown in FIG. 6, D-TXS Info collects uplink parameters of an AP, and the D-TXS Info includes, but is not limited to, uplink buffer information, priority information, and low latency information.

The frame structure of the TXOP sharing information collection request message includes a Buffer Status Presence field, a Priority Information Presence field, and a low latency information presence (Latency Sensitive Traffic Information Presence) field. In the case where Buffer Status Presence, Priority Information Presence, and Latency Sensitive Traffic Information Presence are set to 1, it indicates that a receiving end (that is, a second communication node) is requested to report node-related information. In the case where Buffer Status Presence, Priority Information Presence, and Latency Sensitive Traffic Information Presence are set to 0, it indicates that the receiving end is not requested to report the node-related information.

In an embodiment, FIG. 7 is a diagram illustrating a configuration of a frame structure of a TXOP sharing information collection response message according to an embodiment of the present application. As shown in FIG. 7, presence control fields in a D-TXS Info response are consistent with presence control fields in a corresponding D-TXS Info request.

In the case where a Buffer Status Presence field is set to 1, a Buffer Status field appears and includes a status of uplink buffer information. In the case where a Priority Information Presence field is set to 1, a Priority Information field appears and includes uplink priority information. In the case where the Priority Information Presence field is set to 0, the Priority Information field does not exist.

In the case where Latency Sensitive Traffic Information Presence is set to 1, a low latency information (Latency Sensitive Traffic Information) field appears and includes low latency information. In the case where Latency Sensitive Traffic Information Presence is set to 0, the Latency Sensitive Traffic Information field does not exist.

In an embodiment, FIG. 8 is a diagram illustrating another configuration of a frame structure of a TXOP sharing information collection request message according to an embodiment of the present application. In this embodiment, D-TXS Info only reports a preferred resource allocation of an AP, such as an expected transmission time. As shown in FIG. 8, the frame structure of the TXOP sharing information collection request message includes a resource allocation presence list control (Allocation Duration Presence List Control) field, and the resource allocation presence list control field includes three allocation duration preference presence fields, which are an Allocation Duration Preference 1 Presence field, an Allocation Duration Preference 2 Presence field, and an Allocation Duration Preference 3 Presence field, respectively.

In the case where the Allocation Duration Preference 1 Presence field, the Allocation Duration Preference 2 Presence field, and the Allocation Duration Preference 3 Presence field are set to 1, it indicates that the AP is requested to report preferentially preferred resource allocations. In the case where the Allocation Duration Preference 1 Presence field, the Allocation Duration Preference 2 Presence field, and the Allocation Duration Preference 3 Presence field are set to 0, it indicates that the AP is not requested to report a preferred resource allocation with such priority.

In an embodiment, FIG. 9 is a diagram illustrating another configuration of a frame structure of a TXOP sharing information collection response message according to an embodiment of the present application. As shown in FIG. 9, the frame structure of the TXOP sharing information collection response message includes a resource allocation presence list control field (for example, three allocation duration preference presence fields) and three allocation duration fields, which are an Allocation Duration Preference 1 Presence field, an Allocation Duration Preference 2 Presence field, an Allocation Duration Preference 3 Presence field, an Allocation Duration 1 field, an Allocation Duration 2 field, and an Allocation Duration 3 field, respectively.

In this embodiment, an Allocation Duration Presence List Control field in a D-TXS Info response is consistent with an Allocation Duration Presence List Control field in a corresponding D-TXS Info request.

In the case where the Allocation Duration Preference 1 Presence field is set to 1, the corresponding Allocation Duration 1 field appears and includes a preferred resource allocation with a highest priority. In the case where the Allocation Duration Preference 1 Presence field is set to 0, the corresponding Allocation Duration field does not exist.

In the case where the Allocation Duration Preference 2 Presence field is set to 1, the corresponding Allocation Duration 2 field appears and includes a preferred resource allocation with a second highest priority. In the case where the Allocation Duration Preference 2 Presence field is set to 0, the corresponding Allocation Duration 2 field does not exist.

In the case where the Allocation Duration Preference 3 Presence field is set to 1, the corresponding Allocation Duration 3 field appears and includes a preferred resource allocation with a low priority. In the case where the Allocation Duration Preference 3 Presence field is set to 0, the corresponding Allocation Duration 3 field does not exist.

In an embodiment, FIG. 10 is a diagram illustrating a configuration of a frame structure of a TXOP sharing notification according to an embodiment of the present application. As shown in FIG. 10, the frame structure of the TXOP sharing notification includes a Time Stamp field, a channel bandwidth (Channel Bandwidth Information) field, and a TXOP Duration field. The Time Stamp indicates a time point when the contention for channel access succeeds and a TXOP is acquired. The TXOP Duration indicates a total duration of the TXOP acquired by an AP. The Channel Bandwidth Information indicates bandwidth information (including, but not limited to, frequency band information and a frequency band bandwidth) of the acquired TXOP.

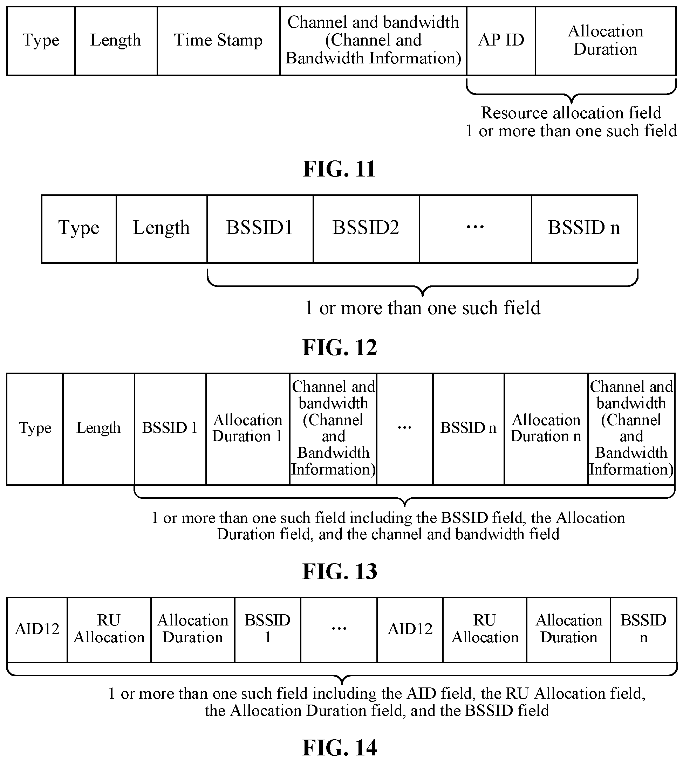

In an embodiment, FIG. 11 is a diagram illustrating a configuration of a frame structure of a TXOP duration allocation message according to an embodiment of the present application. As shown in FIG. 11, the frame structure of the TXOP duration allocation message includes a Time Stamp field, a channel bandwidth (Channel Bandwidth Information) field, and a resource allocation (Resource Allocation of AP) field, where the resource allocation field includes a node identifier (AP ID) field and an Allocation Duration field. The Time Stamp indicates a time point when the contention for channel access succeeds and a TXOP is acquired. A TXOP Duration indicates a total duration of the acquired TXOP.

The frame structure of the TXOP duration allocation message includes one or more Resource Allocation of AP fields, and each Resource Allocation of AP field includes the AP ID and the Allocation Duration, where the AP ID is used to identify a different AP in a D-TXS group, and the Allocation Duration indicates an allocation duration for the AP.

In an embodiment, FIG. 12 is a diagram illustrating a configuration of a structure of a TXOP sharing trigger frame according to an embodiment of the present application. As shown in FIG. 12, the TXOP sharing trigger frame carries one or more basic service set identifier (BSSID) fields, and the BSSID field is used to indicate BSSID information. The BSSID information is BSSID information of another AP in a TXOP sharing group (D-TXS group). The BSSID information in the TXOP sharing trigger frame is the BSSID information of the AP and indicates that the AP can occupy a TXOP to perform a low latency transmission, where a transmission time is determined according to the previous D-TXS TXOP Duration Allocation.

In an embodiment, FIG. 13 is a diagram illustrating another configuration of a structure of a TXOP sharing trigger frame according to an embodiment of the present application. As shown in FIG. 13, the TXOP sharing trigger frame carries BSSID fields, Allocation Duration fields, and channel bandwidth fields of one or more APs. The Allocation Duration field is used to indicate an Allocation Duration of each AP; and the channel bandwidth field is used to indicate a channel bandwidth of each AP. In actual operation, APs occupy a TXOP in sequence to perform low latency transmissions.

In an embodiment, FIG. 14 is a diagram illustrating another configuration of a structure of a TXOP sharing trigger frame according to an embodiment of the present application. As shown in FIG. 14, the TXOP sharing trigger frame may include an AID field, a resource unit (RU) Allocation field, a basic service set identifier field, and an allocation duration field. A user info format is extended as follows based on an MU-RTS TXS Trigger Frame.

AID12 = 2008, which is used to indicate the allocation to another AP whose specific information is determined according to the BSSID field.

The RU Allocation is used to indicate operating channel bandwidth information of a TXOP.

The Allocation Duration indicates an allocated transmission time (that is, the allocation duration).

In actual operation, APs occupy the TXOP in sequence to perform low latency transmissions.

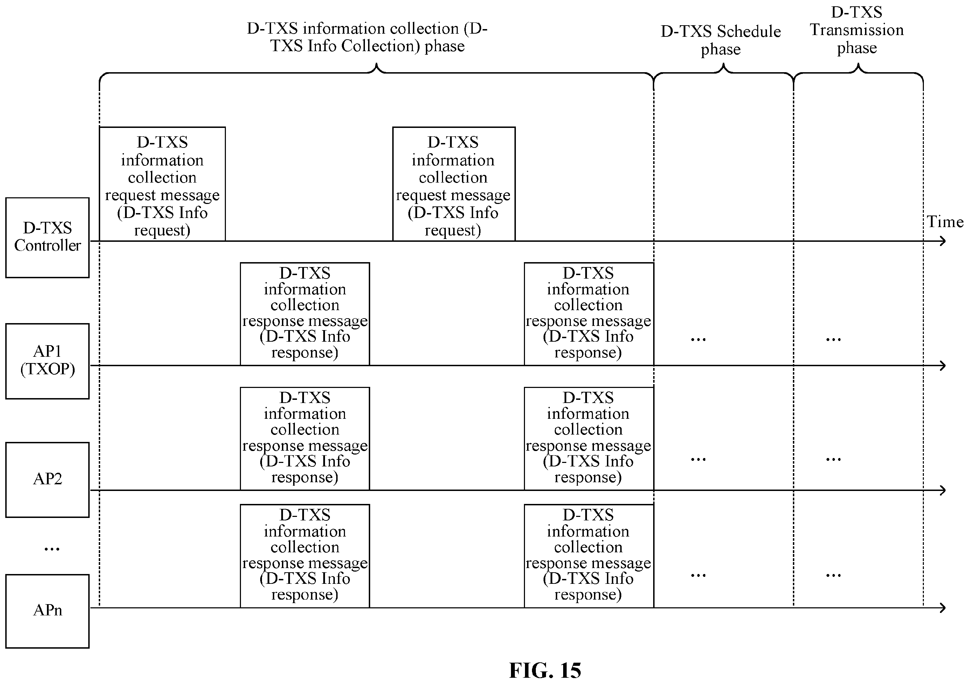

In an embodiment, FIG. 15 is a diagram illustrating reporting of node-related information according to an embodiment of the present application. In this embodiment, a reporting process of the node-related information is described by using an example in which a first communication node is a D-TXS Controller and a second communication node is an AP. As shown in FIG. 15, in this embodiment, the node-related information is reported explicitly.

In a D-TXS Info Collection phase, the D-TXS Controller actively sends a D-TXS Info request message each time to request the AP to report D-TXS Info through a D-TXS Info response message.

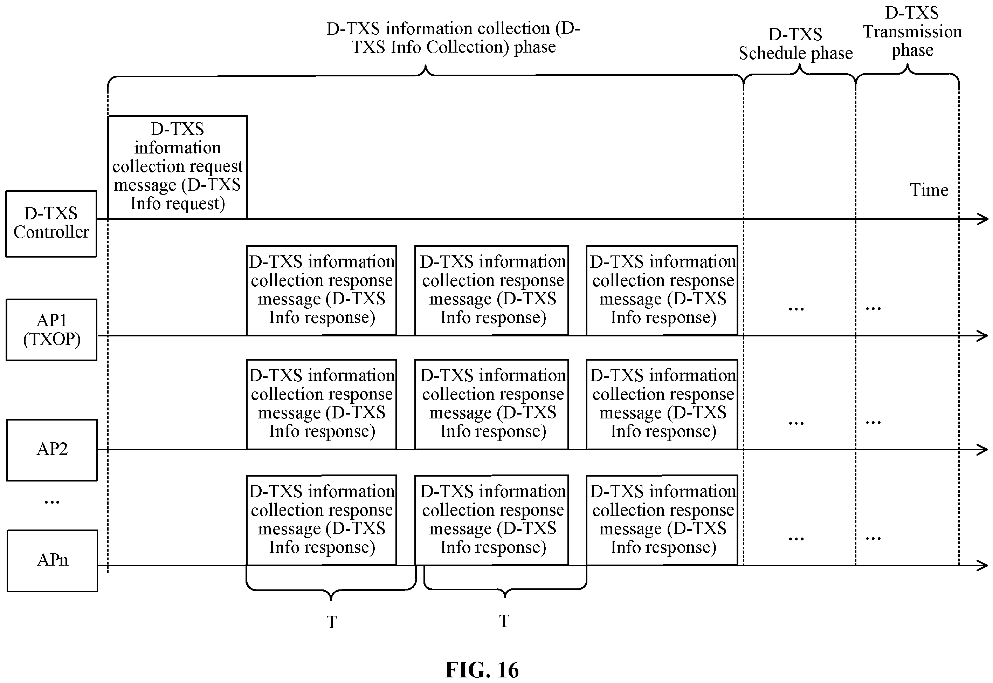

In an embodiment, FIG. 16 is another diagram illustrating reporting of node-related information according to an embodiment of the present application. As shown in FIG. 16, in this embodiment, the node-related information is reported implicitly.

In a D-TXS Info Collection phase, a D-TXS Controller actively sends a D-TXS Info request message for the first time, where a reporting period at which an AP subsequently reports D-TXS Info is carried in the D-TXS Info request message. Subsequently, the AP can actively and periodically send a D-TXS Info response to report the corresponding node-related information without being triggered by the D-TXS Info request message.

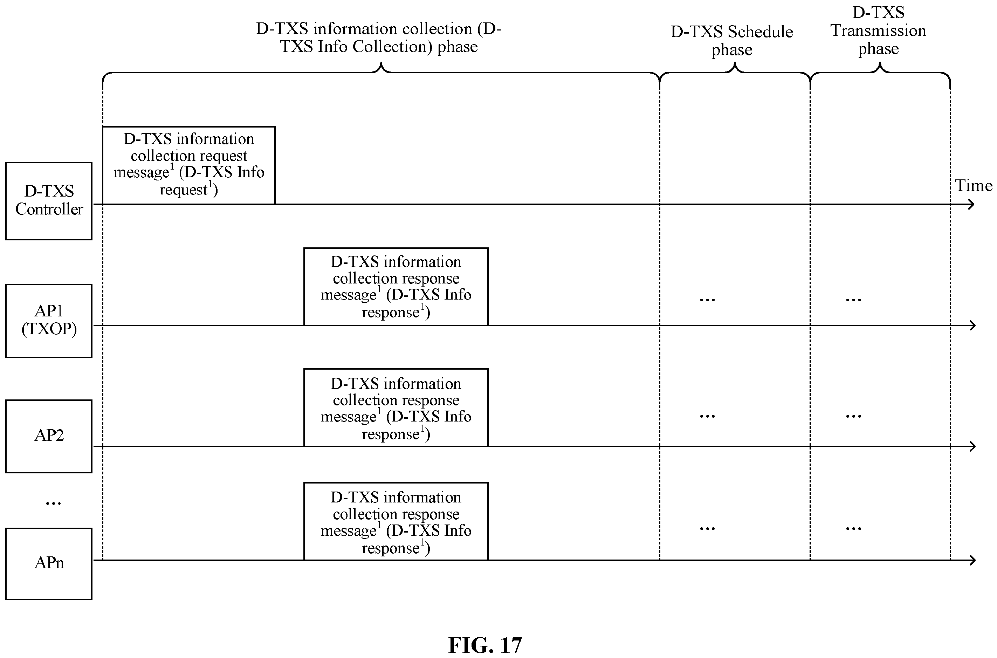

In an embodiment, FIG. 17 is a diagram illustrating transmissions of a D-TXS information collection request message and D-TXS information collection response messages according to an embodiment of the present application. In this embodiment, a transmission process of the D-TXS information collection request message and the D-TXS information collection response messages is described by using an example in which a first communication node is a D-TXS Controller and a second communication node is an AP. As shown in FIG. 17, the D-TXS information collection request message (that is, D-TXS Info request1) adopts a frame structure including a Buffer Status Presence field, a Priority Information Presence field, and a Latency Sensitive Traffic Information Presence field, and the D-TXS information collection response message (that is, D-TXS Info response1) adopts a frame structure including the Buffer Status Presence field, the Priority Information Presence field, the Latency Sensitive Traffic Information Presence field, a Buffer Status field, a Priority Information field, and a Latency Sensitive Traffic Information field.

In this embodiment, according to information requirements in the D-TXS Info request message from the D-TXS Controller, the AP reports one or more parameters of uplink buffer status information, priority information, or low latency information. Subsequently, the D-TXS Controller may complete a resource allocation according to a Resource Allocation determination criterion in conjunction with uplink and downlink information.

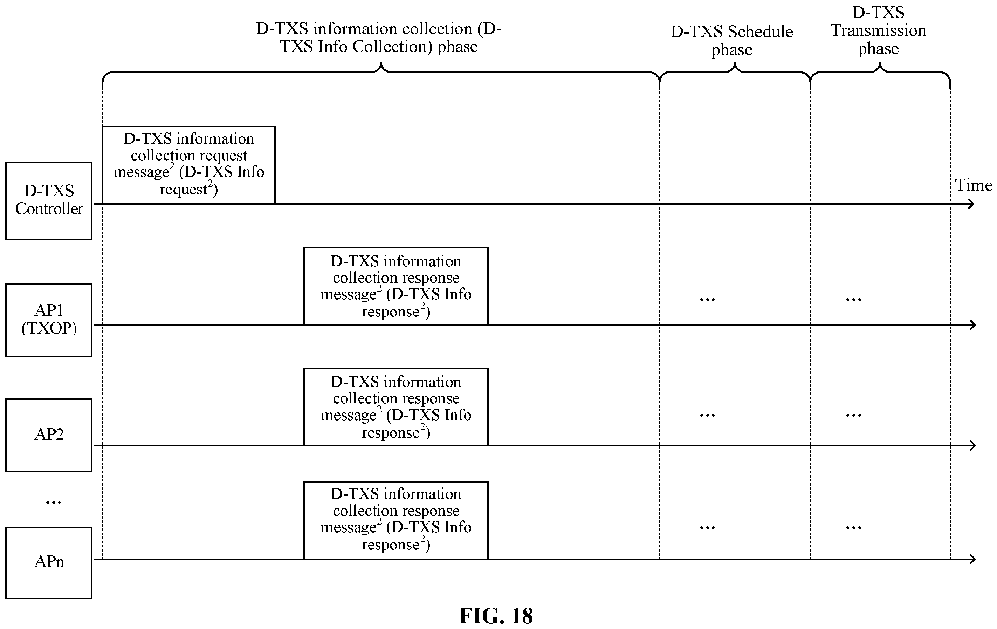

In an embodiment, FIG. 18 is another diagram illustrating transmissions of a D-TXS information collection request message and D-TXS information collection response messages according to an embodiment of the present application. In this embodiment, a transmission process of the D-TXS information collection request message and the D-TXS information collection response messages is described by using an example in which a first communication node is a D-TXS Controller and a second communication node is an AP. As shown in FIG. 18, the D-TXS information collection request message (that is, D-TXS Info request2) adopts a frame structure including an Allocation Duration Preference 1 Presence field, an Allocation Duration Preference 2 Presence field, and an Allocation Duration Preference 3 Presence field, and the D-TXS information collection response message (that is, D-TXS Info response2) adopts a frame structure including the Allocation Duration Preference 1 Presence field, the Allocation Duration Preference 2 Presence field, the Allocation Duration Preference 3 Presence field, an Allocation Duration 1 field, an Allocation Duration 2 field, and an Allocation Duration 3 field.

In this embodiment, according to information requirements in the D-TXS Info request from the D-TXS Controller, the AP reports one or more resource allocations preferentially preferred by the AP. Subsequently, the D-TXS Controller completes a resource allocation according to a Resource Allocation determination criterion and preferred resource allocations related to multiple APs.

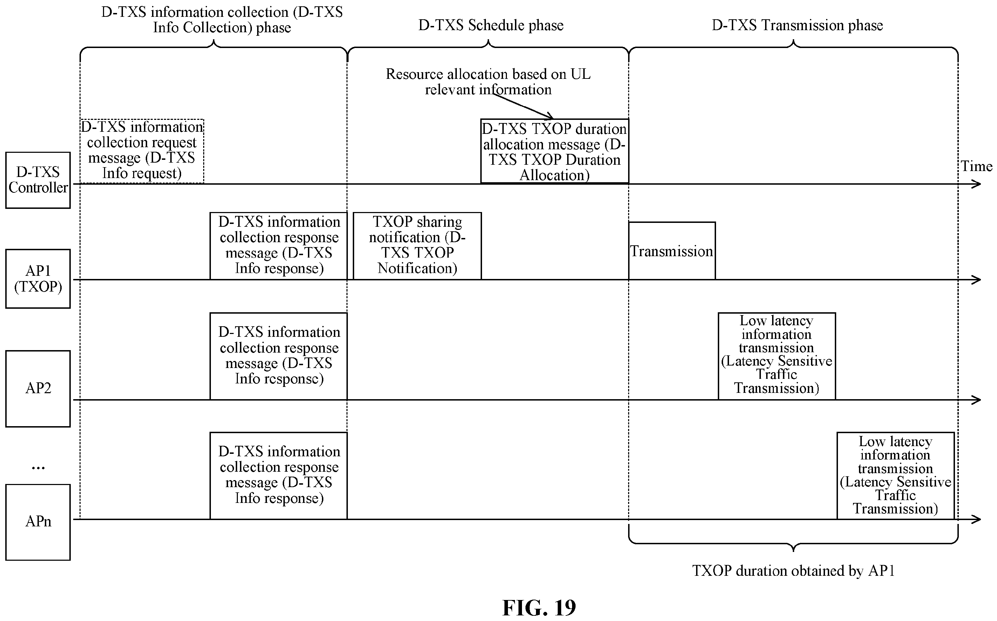

In an embodiment, FIG. 19 is a diagram illustrating an implementation of TXOP sharing according to an embodiment of the present application. In this embodiment, a process of performing a resource allocation according to node-related information collected in an uplink direction is described by using an example in which a first communication node is a D-TXS Controller and a second communication node is an AP. As shown in FIG. 19, in a D-TXS Schedule phase, the D-TXS Controller performs the resource allocation according to a Resource Allocation determination criterion and the node-related information collected in the uplink direction.

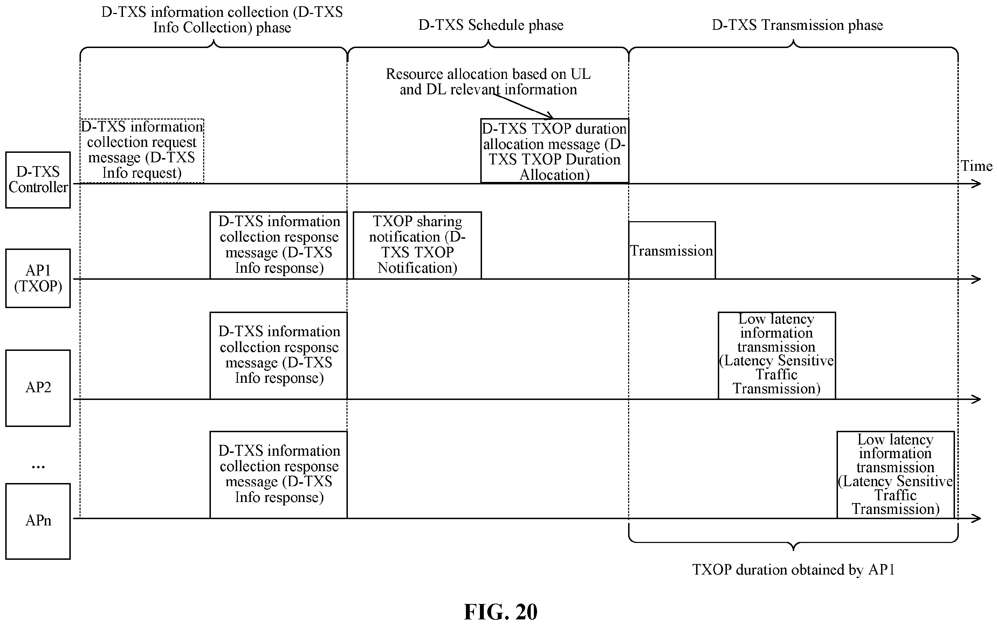

In an embodiment, FIG. 20 is a diagram illustrating another implementation of TXOP sharing according to an embodiment of the present application. In this embodiment, a process of performing a resource allocation according to node-related information collected in an uplink direction and downlink relevant information maintained by a D-TXS Controller in a downlink direction is described by using an example in which a first communication node is the D-TXS Controller and a second communication node is an AP. As shown in FIG. 20, the D-TXS Controller performs the resource allocation according to a Resource Allocation determination criterion, information about each AP and collected in the uplink direction, and the relevant information maintained by the D-TXS Controller in the downlink direction.

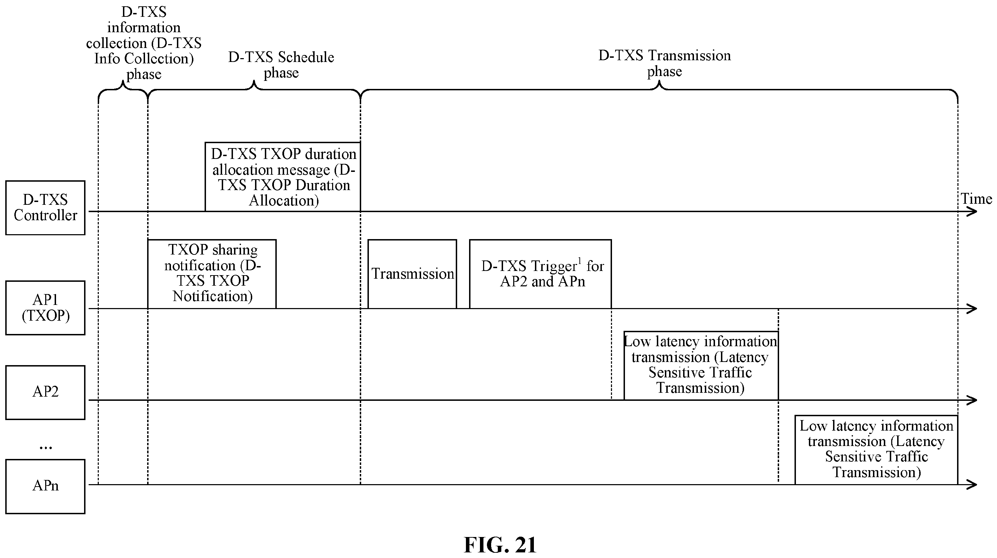

In an embodiment, FIG. 21 is a diagram illustrating an implementation of a D-TXS transmission phase according to an embodiment of the present application. In this embodiment, an implementation process of the D-TXS transmission phase is described by using an example in which a first-type communication node is AP1 and second-type communication nodes are AP2 to APn. As shown in FIG. 21, AP1 instructs, through D-TXS Trigger1, AP2 and APn to perform low latency transmissions. Detailed information allocated to AP2 and APn is in accordance with corresponding information in a D-TXS TXOP Duration Allocation received last time. A frame structure of D-TXS Trigger1 includes BSSID fields.

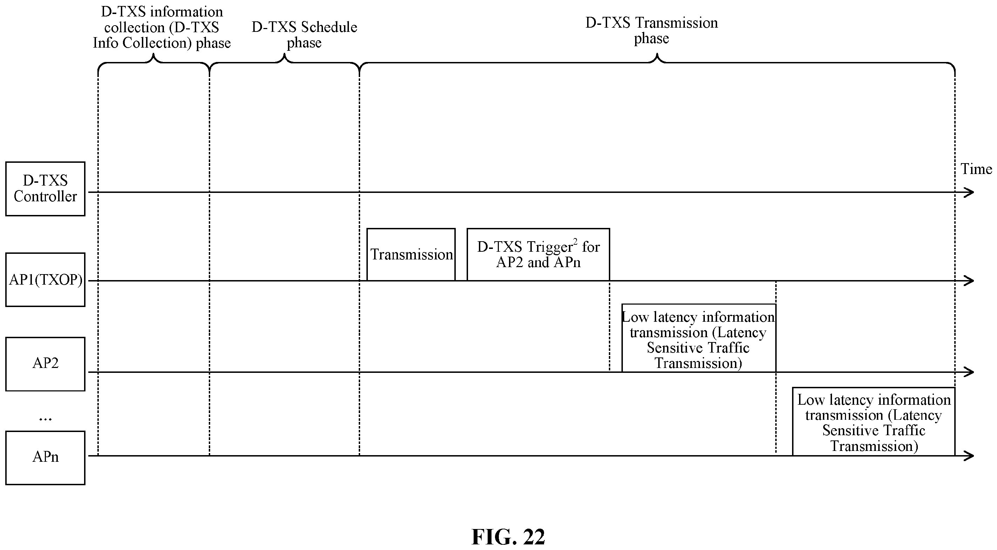

In an embodiment, FIG. 22 is a diagram illustrating another implementation of a D-TXS transmission phase according to an embodiment of the present application. In this embodiment, an implementation process of the D-TXS transmission phase is described by using an example in which a first-type communication node is AP1 and second-type communication nodes are AP2 to APn. As shown in FIG. 22, AP1 instructs, through D-TXS Trigger2, AP2 and APn to perform low latency transmissions, where D-TXS Trigger2 carries detailed TXOP occupancy information. A frame structure of D-TXS Trigger2 includes BSSID fields, Allocation Duration fields, and channel bandwidth fields.

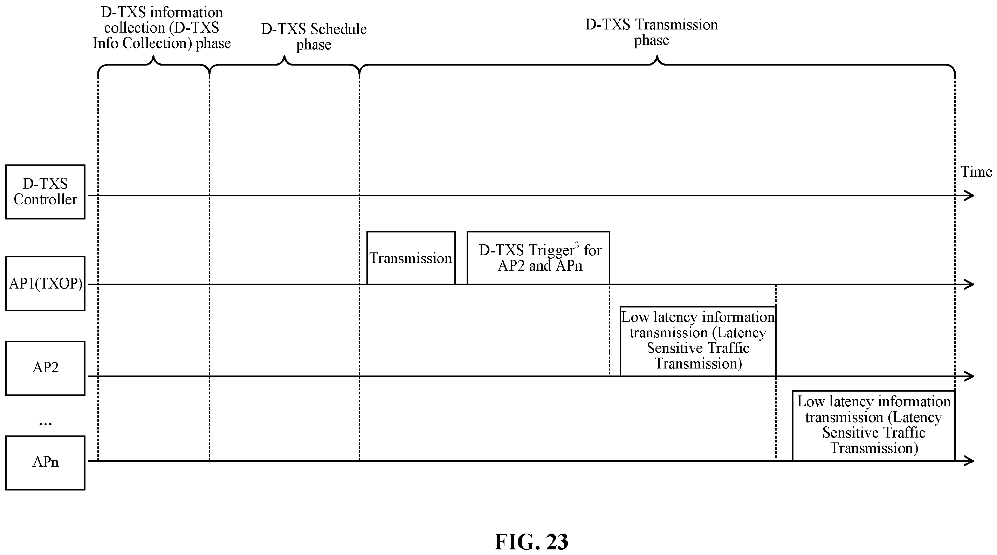

In an embodiment, FIG. 23 is a diagram illustrating another implementation of a D-TXS transmission phase according to an embodiment of the present application. In this embodiment, an implementation process of the D-TXS transmission phase is described by using an example in which a first-type communication node is AP1 and second-type communication nodes are AP2 to APn. As shown in FIG. 23, AP1 instructs, through D-TXS Trigger3, AP2 and APn to perform low latency transmissions, where the D-TXS Trigger is a variant of an MU-RTS TXOP Sharing frame, and a variant of user info provides detailed TXOP occupancy information of AP2 and APn. A frame structure of D-TXS Trigger3 includes AID fields, resource unit allocation fields, BSSID fields, and allocation duration fields.

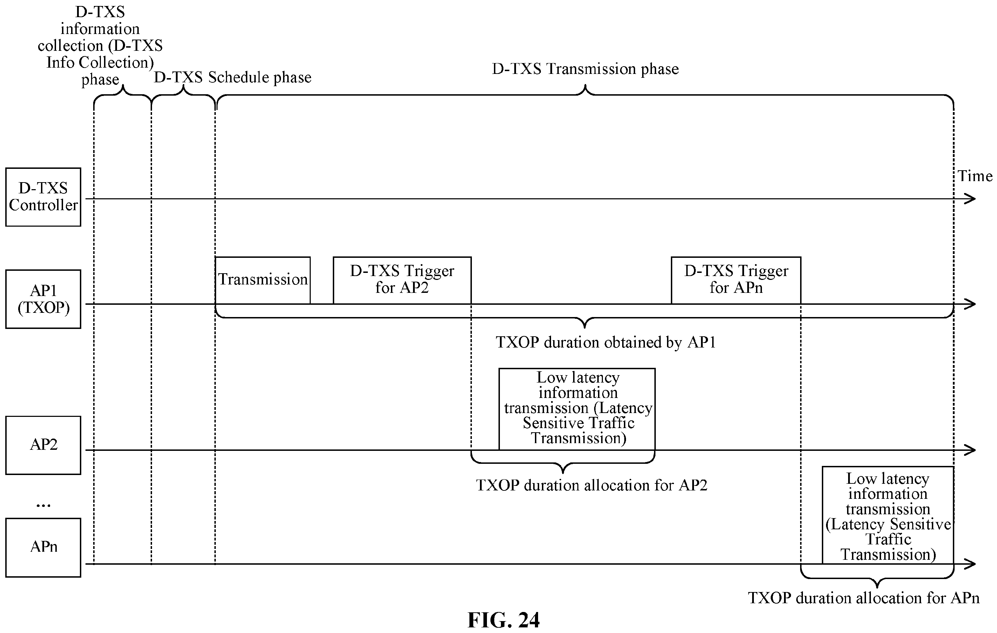

In an embodiment, FIG. 24 is a diagram illustrating another implementation of a D-TXS transmission phase according to an embodiment of the present application. In this embodiment, an implementation process of the D-TXS transmission phase is described by using an example in which a first-type communication node is AP1, second-type communication nodes are AP2 to APn, and a D-TXS Trigger includes node-related information of one AP. As shown in FIG. 24, the D-TXS Trigger includes the node-related information of one AP. In this embodiment, after a transmission in an occupied part of a TXOP, AP1 sends the D-TXS Trigger to instruct AP2 to occupy a part of the TXOP (that is, the AP2 is allocated with an allocation duration) to perform a low latency transmission. After the AP2 completes the transmission within the allocation duration of the AP2, AP1 sends the D-TXS Trigger again to instruct APn to occupy a part of the TXOP (that is, the APn is allocated with an allocation duration) to perform a low latency transmission. After the APn completes the transmission within the allocation duration of the APn, the TXOP obtained by AP1 through contention expires.

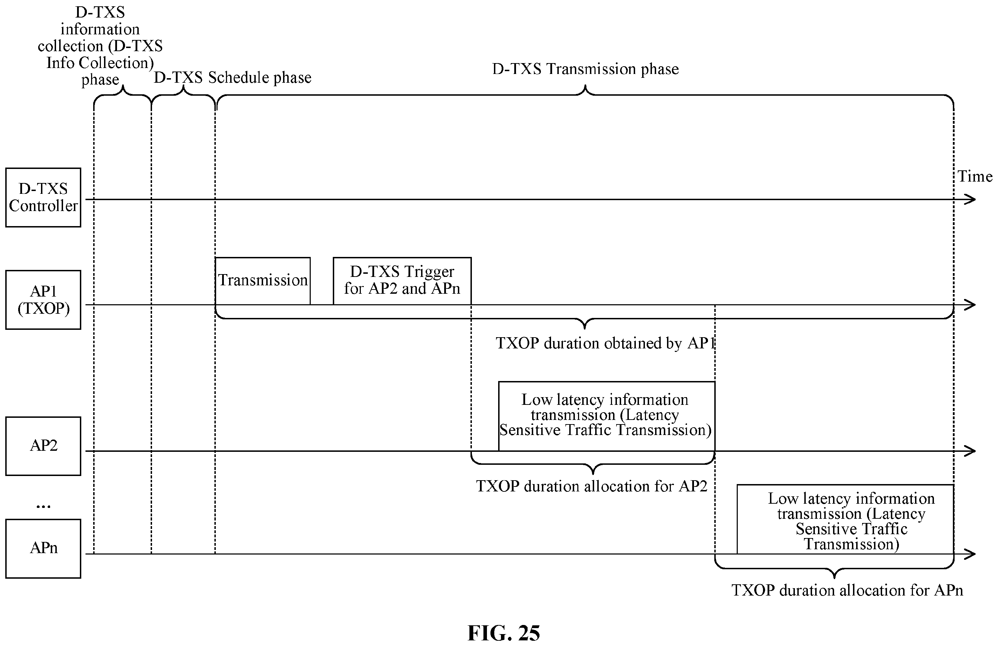

In an embodiment, FIG. 25 is a diagram illustrating another implementation of a D-TXS transmission phase according to an embodiment of the present application. In this embodiment, an implementation process of the D-TXS transmission phase is described by using an example in which a first-type communication node is AP1, second-type communication nodes are AP2 to APn, and a D-TXS Trigger includes node-related information of at least two APs. As shown in FIG. 25, the D-TXS Trigger includes the node-related information of at least two APs (that is, AP2 to APn). In this embodiment, after a transmission in an occupied part of a TXOP, AP1 sends the D-TXS Trigger to instruct AP2 and APn to successively occupy parts of the TXOP to perform low latency transmissions. After APn completes the transmission, the TXOP obtained by AP1 through contention expires.

The D-TXS Trigger sent by AP1 can instruct one or more APs to occupy the TXOP for transmission. The figure shows an example in which the number of APs is 2.

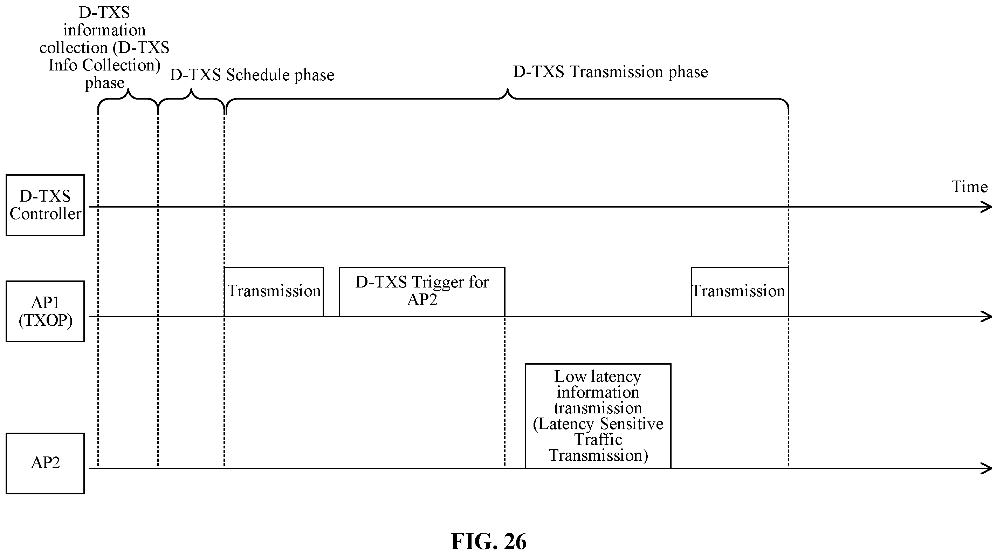

In an embodiment, FIG. 26 is a diagram illustrating another implementation of a D-TXS transmission phase according to an embodiment of the present application. In this embodiment, a different occupation manner of an AP in the D-TXS transmission phase is described by using an example in which a first-type communication node is AP1 and second-type communication nodes are AP2 to APn. As shown in FIG. 26, after an allocation duration allocated by AP1 to AP2 expires, AP1 continues to occupy a TXOP for transmission until the TXOP expires.

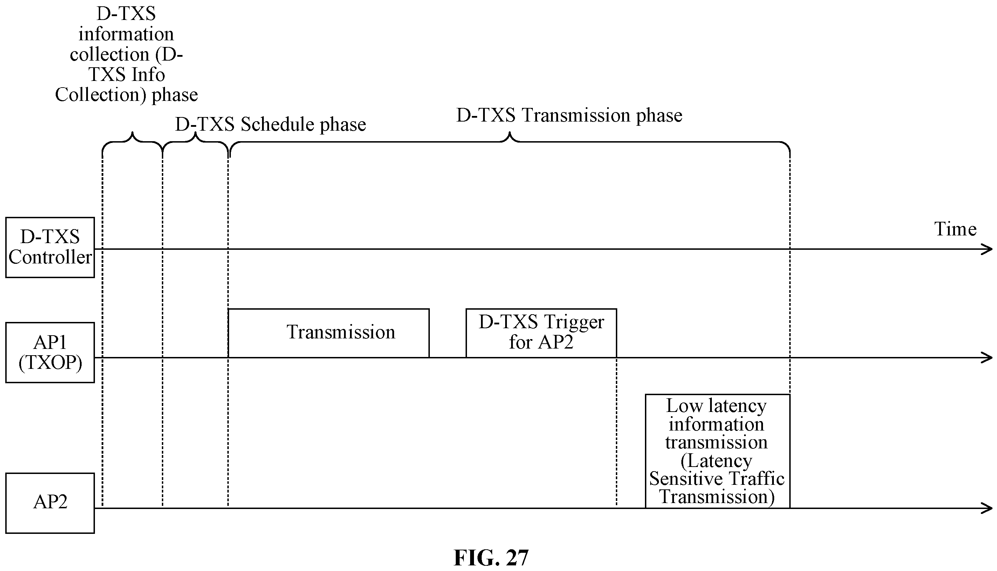

In an embodiment, FIG. 27 is a diagram illustrating another implementation of a D-TXS transmission phase according to an embodiment of the present application. In this embodiment, a different occupation manner of an AP in the D-TXS transmission phase is described by using an example in which a first-type communication node is AP1 and second-type communication nodes are AP2 to APn. As shown in FIG. 27, after an allocation duration allocated by AP1 to AP2 expires, AP1 terminates a TXOP duration in advance.

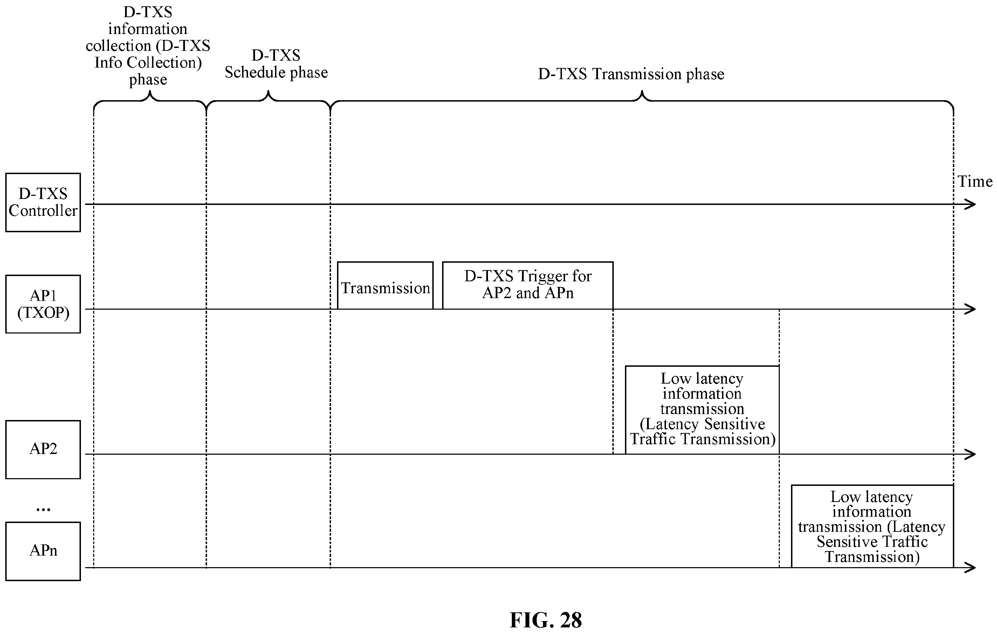

In an embodiment, FIG. 28 is a diagram illustrating another implementation of a D-TXS transmission phase according to an embodiment of the present application. In this embodiment, air interface fairness is described by using an example in which a first-type communication node is AP1 and second-type communication nodes are AP2 to APn. As shown in FIG. 28, after acquiring a TXOP, AP1 shares resources of a TXOP duration with other APs such as AP2 and APn for low latency transmissions.

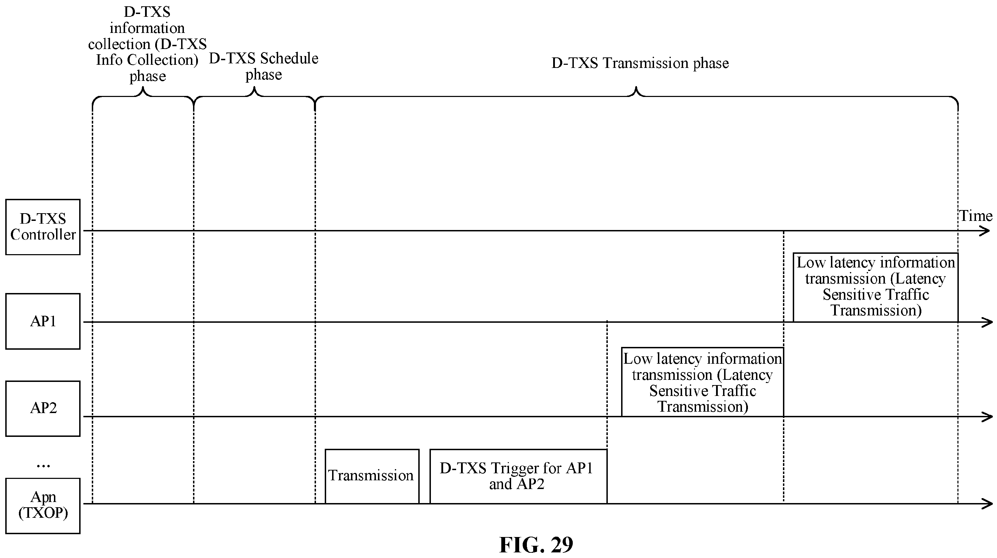

In an embodiment, FIG. 29 is a diagram illustrating another implementation of a D-TXS transmission phase according to an embodiment of the present application. In this embodiment, air interface fairness is described by using an example in which a first-type communication node is APn and second-type communication nodes are AP1 and AP2. As shown in FIG. 29, after acquiring a TXOP, APn shares resources of a TXOP duration with other APs such as AP1 and AP2 for low latency transmissions.

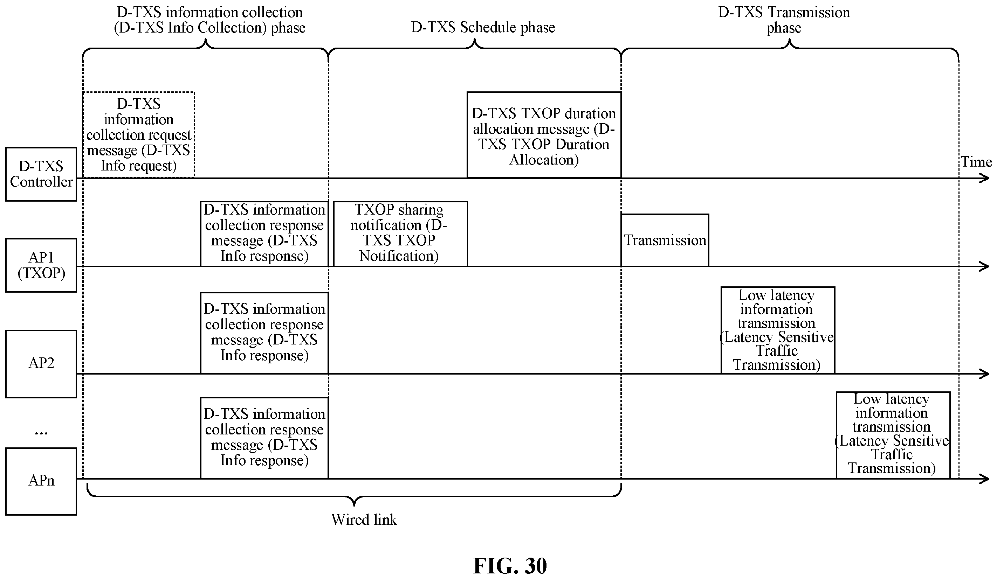

In an embodiment, FIG. 30 is a diagram illustrating an implementation of a transmission manner in a D-TXS Info Collection phase and a D-TXS Schedule phase according to an embodiment of the present application. In this embodiment, an implementation process in which a wired transmission manner is used in the D-TXS Info Collection phase and the D-TXS Schedule phase is described by using an example in which a first-type communication node is AP1 and second-type communication nodes are AP2 to APn. As shown in FIG. 30, a wired manner is used for transmissions in the D-TXS Info Collection phase and the D-TXS Schedule phase.

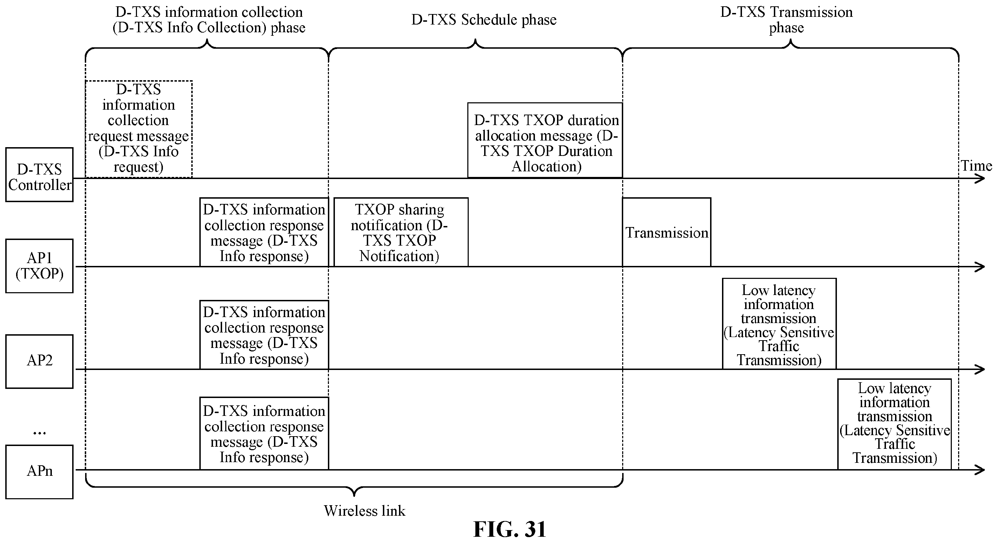

In an embodiment, FIG. 31 is a diagram illustrating another implementation of a transmission manner in a D-TXS Info Collection phase and a D-TXS Schedule phase according to an embodiment of the present application. In this embodiment, an implementation process in which a wireless transmission manner is used in the D-TXS Info Collection phase and the D-TXS Schedule phase is described by using an example in which a first-type communication node is AP1 and second-type communication nodes are AP2 to APn. As shown in FIG. 31, a wireless manner is used for transmissions in the D-TXS Info Collection phase and the D-TXS Schedule phase.

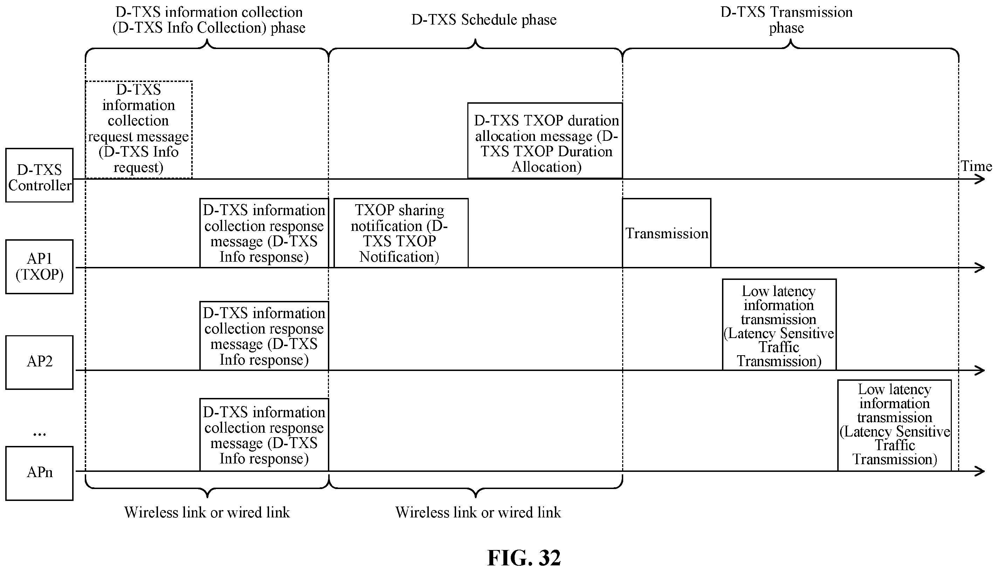

In an embodiment, FIG. 32 is a diagram illustrating another implementation of a transmission manner in a D-TXS Info Collection phase and a D-TXS Schedule phase according to an embodiment of the present application. In this embodiment, an implementation process in which a hybrid transmission manner is used in the D-TXS Info Collection phase and the D-TXS Schedule phase is described by using an example in which a first-type communication node is AP1 and second-type communication nodes are AP2 to APn. As shown in FIG. 32, a wired or wireless manner is used for transmissions in the D-TXS Info Collection phase and the D-TXS Schedule phase.

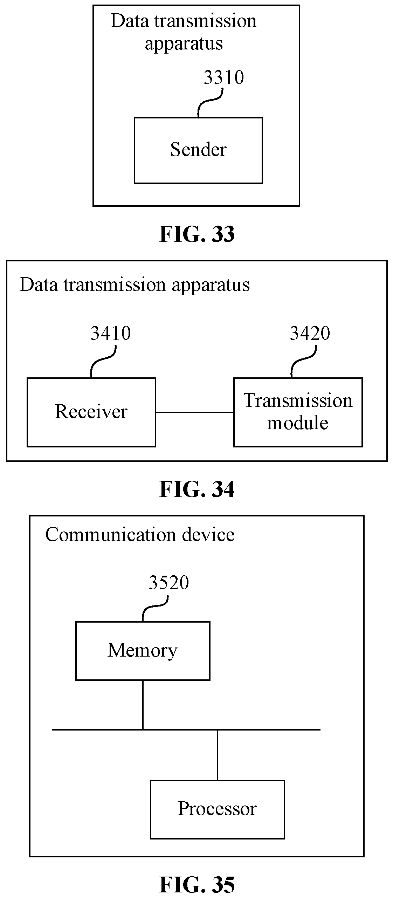

In an embodiment, FIG. 33 is a block diagram of a data transmission apparatus according to an embodiment of the present application. This embodiment is applied to a first communication node. As shown in FIG. 33, the data transmission apparatus in this embodiment includes a sender 3310.

For each of at least one second communication node, the sender 3310 is configured to send an allocation duration to the second communication node to enable the second communication node to perform a data transmission within the allocation duration, where the allocation duration is a subset of a pre-received TXOP duration.

In an embodiment, the data transmission apparatus applied to the first communication node further includes a division module.

The division module is configured to, in response to a received TXOP sharing notification carrying the TXOP duration, divide the TXOP duration into at least one allocation duration according to uplink and downlink relevant information.

In an embodiment, before the response to the received TXOP sharing notification carrying the TXOP duration, the data transmission apparatus applied to the first communication node further includes a receiver.

The sender is further configured to send a TXOP sharing information collection request message to each second communication node in a TXOP sharing group.

The receiver is configured to receive a TXOP sharing information collection response message carrying node-related information from the second communication node.

In an embodiment, the uplink and downlink relevant information includes at least one of downlink relevant information or the node-related information.

The downlink relevant information includes at least one of downlink buffer information, priority information, low latency information, or bandwidth information.

The node-related information includes at least one of uplink buffer information, priority information, low latency information, or neighbor information.

In an embodiment, the node-related information is reported explicitly or implicitly.

In an embodiment, a frame structure of the TXOP sharing information collection request message includes at least one of a buffer status presence field, a priority information presence field, or a low latency information presence field.

In an embodiment, a frame structure of the TXOP sharing information collection response message includes the buffer status presence field, the priority information presence field, and the low latency information presence field.

The frame structure of the TXOP sharing information collection response message further includes one of a buffer status field, a priority information field, or a low latency information field.

In an embodiment, the frame structure of the TXOP sharing information collection request message includes at least one allocation duration preference presence field.

In an embodiment, the frame structure of the TXOP sharing information collection response message includes the allocation duration preference presence field.

The frame structure of the TXOP sharing information collection response message further includes an allocation duration field.

In an embodiment, the TXOP sharing notification further carries time stamp information and channel bandwidth information.

In an embodiment, a frame structure of the TXOP sharing notification includes a time stamp field, a channel bandwidth field, and a TXOP duration field.

In an embodiment, a message carrying the allocation duration includes a TXOP duration allocation message.

In an embodiment, a frame structure of the TXOP duration allocation message includes the time stamp field, the channel bandwidth field, and a resource allocation field.

The resource allocation field includes a node identifier field and an allocation duration field.

The data transmission apparatus of this embodiment is configured to perform the data transmission method applied to the first communication node in the embodiment shown in FIG. 3 and has implementation principles and technical effects similar to those of the data transmission method applied to the first communication node in the embodiment shown in FIG. 3, where the details are not repeated here.

In an embodiment, FIG. 34 is a block diagram of another data transmission apparatus according to an embodiment of the present application. This embodiment is applied to a second communication node. As shown in FIG. 34, the data transmission apparatus in this embodiment includes a receiver 3410 and a transmission module 3420.

The receiver 3410 is configured to receive an allocation duration from a first communication node, where the allocation duration is obtained by a first communication node by dividing a TXOP duration according to uplink and downlink relevant information.

The transmission module 3420 is configured to perform a data transmission within the allocation duration.

In an embodiment, before the receiver 3410 receives the allocation duration from the first communication node, the data transmission apparatus applied to the second communication node further includes a sender.

The receiver 3410 is further configured to receive a TXOP sharing information collection request message from the first communication node.

The sender is configured to send a TXOP sharing information collection response message carrying node-related information to the first communication node.

In an embodiment, the second communication node is a first-type communication node, where the first-type communication node is a communication node that successfully contends for channel access and acquires a TXOP; and before the receiver receives the allocation duration from the first communication node, the data transmission apparatus applied to the second communication node further includes the sender.

The sender is further configured to send a TXOP sharing notification carrying the TXOP duration to the first communication node.

In an embodiment, the second communication node is the first-type communication node; and performing the data transmission within the allocation duration includes the following.

The first-type communication node instructs, through a TXOP sharing trigger frame, a second-type communication node to perform a data transmission within an allocation duration corresponding to the second-type communication node, where the second-type communication node is a communication node other than the first-type communication node in a TXOP sharing group.

In an embodiment, the second communication node is the first-type communication node; and performing the data transmission within the allocation duration includes the following.

After the allocation duration of the second-type communication node ends, the first-type communication node continues the data transmission until the TXOP duration ends.

Alternatively, after the allocation duration of the second-type communication node ends, the first-type communication node terminates TXOP sharing at an end of the allocation duration.

In an embodiment, a structure of the TXOP sharing trigger frame includes a basic service set identifier field, where the basic service set identifier field is used to indicate a basic service set identifier of the second-type communication node.

In an embodiment, the structure of the TXOP sharing trigger frame includes the basic service set identifier field, an allocation duration field, and a channel bandwidth field, where the basic service set identifier field is used to indicate the basic service set identifier of the second-type communication node.

In an embodiment, the structure of the TXOP sharing trigger frame includes a resource unit allocation field, the basic service set identifier field, and the allocation duration field, where the basic service set identifier field is used to indicate the basic service set identifier of the second-type communication node.

The data transmission apparatus of this embodiment is configured to perform the data transmission method applied to the second communication node in the embodiment shown in FIG. 4 and has implementation principles and technical effects similar to those of the data transmission method applied to the second communication node in the embodiment shown in FIG. 4, where the details are not repeated here.

In an embodiment, FIG. 35 is a structural diagram of a communication device according to an embodiment of the present application. As shown in FIG. 35, the device of the present application includes a processor 3510 and a memory 3520. One or more processors 3510 may be provided in the device. FIG. 35 shows one processor 3510 as an example. One or more memories 3520 may be provided in the device. FIG. 35 shows one memory 3520 as an example. The processor 3510 and the memory 3520 of the device are connected by a bus or in other manners. FIG. 35 shows connection by a bus as an example. In this embodiment, the device may be a resource management component.

As a computer-readable storage medium, the memory 3520 may be configured to store software programs, computer-executable programs, and modules, such as program instructions/modules corresponding to the device of any embodiment of the present application (for example, the sender 3310 in the data transmission apparatus). The memory 3520 may include a program storage region and a data storage region. The program storage region may store an operating system and an application program required by at least one function. The data storage region may store data created according to the use of the device. Additionally, the memory 3520 may include a high-speed random-access memory and may also include a nonvolatile memory such as at least one disk memory, a flash memory, or another nonvolatile solid-state memory. In some examples, memories 3520 remote from the processor 3510 and connectable to the device via a network may be provided. Examples of the network include, but are not limited to, the Internet, an intranet, a local area network, a mobile communication network, and a combination thereof.

In the case where the communication device is the first communication node, the device may be configured to perform the data transmission method applied to the first communication node according to any previous embodiment and has corresponding functions and effects.

In the case where the communication device is the second communication node, the device may be configured to perform the data transmission method applied to the second communication node according to any previous embodiment and has corresponding functions and effects.

An embodiment of the present application provides a storage medium storing computer-executable instructions which, when executed by a computer processor, cause the processor to perform a data transmission method applied to a first communication node. The data transmission method applied to the first communication node includes for each of at least one second communication node, sending an allocation duration to the second communication node to enable the second communication node to perform a data transmission within the allocation duration, where the allocation duration is a subset of a pre-received TXOP duration.

An embodiment of the present application provides a storage medium storing computer-executable instructions which, when executed by a computer processor, cause the processor to perform a data transmission method applied to a second communication node. The data transmission method applied to the second communication node includes receiving an allocation duration from a first communication node, and performing a data transmission within the allocation duration, where the allocation duration is obtained by the first communication node by dividing a TXOP duration according to uplink and downlink relevant information;.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

Some embodiments of the present application are described above and are not intended to limit the present application. For those skilled in the art, the present application may have various modifications and variations. Any modifications, equivalent substitutions, improvements, and the like made within the spirit and principle of the present application are within the scope of the present application.

## Claims

1. A data transmission method, which is applied to a first communication node, comprising:
for each of at least one second communication node, sending an allocation duration to the second communication node to enable the second communication node to perform a data transmission within the allocation duration, wherein the allocation duration is a subset of a pre-received transmission opportunity, TXOP, duration.

2. The data transmission method of claim 1, further comprising:
in response to a received TXOP sharing notification carrying the TXOP duration, dividing the TXOP duration into at least one allocation duration according to uplink and downlink relevant information.

3. The data transmission method of claim 1 or 2, before the response to the received TXOP sharing notification carrying the TXOP duration, further comprising:
sending a TXOP sharing information collection request message to each second communication node in a TXOP sharing group; and
receiving a TXOP sharing information collection response message carrying node-related information from the second communication node.

4. The data transmission method of claim 2, wherein the uplink and downlink relevant information comprises at least one of:
downlink relevant information comprising at least one of downlink buffer information, priority information, low latency information, or bandwidth information; or
node-related information comprising at least one of uplink buffer information, priority information, low latency information, or neighbor information.

5. The data transmission method of claim 3, wherein the node-related information is reported explicitly or implicitly.

6. The data transmission method of claim 3, wherein a frame structure of the TXOP sharing information collection request message comprises at least one of a Buffer Status Presence field, a Priority Information Presence field, or a low latency information presence field.

7. The data transmission method of claim 3, wherein a frame structure of the TXOP sharing information collection response message comprises:
a buffer status presence field, a priority information presence field, and a low latency information presence field; or
a buffer status presence field, a priority information presence field, a low latency information presence field, and one of a buffer status field, a priority information field, or a low latency information field.

8. The data transmission method of claim 3, wherein a frame structure of the TXOP sharing information collection request message comprises at least one allocation duration preference presence field.

9. The data transmission method of claim 3, wherein a frame structure of the TXOP sharing information collection response message comprises:
an allocation duration preference presence field; or
an allocation duration preference presence field and an allocation duration field.

10. The data transmission method of claim 2, wherein the TXOP sharing notification carries time stamp information and channel bandwidth information.

11. The data transmission method of claim 2, wherein a frame structure of the TXOP sharing notification comprises a time stamp field, a channel bandwidth field, and a TXOP duration field.

12. The data transmission method of any one of claims 1 to 3, wherein a message carrying the allocation duration comprises a TXOP duration allocation message.

13. The data transmission method of claim 12, wherein a frame structure of the TXOP duration allocation message comprises:
a time stamp field,
a channel bandwidth field, and
a resource allocation field comprising a node identifier field and an allocation duration field.

14. A data transmission method, which is applied to a second communication node, comprising:
receiving an allocation duration from a first communication node, wherein the allocation duration is obtained by the first communication node by dividing a transmission opportunity, TXOP, duration according to uplink and downlink relevant information; and
performing a data transmission within the allocation duration.

15. The data transmission method of claim 14, before receiving the allocation duration from the first communication node, further comprising:
receiving a TXOP sharing information collection request message from the first communication node; and
sending a TXOP sharing information collection response message carrying node-related information to the first communication node.

16. The data transmission method of claim 14, wherein,
the second communication node is a first-type communication node which is a communication node that successfully contends for channel access and acquires a TXOP; and
before receiving the allocation duration from the first communication node, the data transmission method further comprises:
sending a TXOP sharing notification carrying the TXOP duration to the first communication node.

17. The data transmission method of claim 14, wherein the second communication node is a first-type communication node; and performing the data transmission within the allocation duration comprises:
instructing, by the first-type communication node and through a TXOP sharing trigger frame, a second-type communication node to perform a data transmission within an allocation duration corresponding to the second-type communication node, wherein the second-type communication node is a communication node other than the first-type communication node in a TXOP sharing group.

18. The data transmission method of claim 14, wherein the second communication node is a first-type communication node; and performing the data transmission within the allocation duration comprises:
after an allocation duration of a second-type communication node ends, continuing, by the first-type communication node, the data transmission until the TXOP duration ends, wherein the second-type communication node is a communication node other than the first-type communication node in a TXOP sharing group; or
after an allocation duration of a second-type communication node ends, terminating, by the first-type communication node, TXOP sharing at an end of the allocation duration of the second-type communication node, wherein the second-type communication node is a communication node other than the first-type communication node in a TXOP sharing group.

19. The data transmission method of claim 17, wherein a frame structure of the TXOP sharing trigger frame comprises at least one of:
a resource unit allocation field,
a basic service set identifier field used to indicate a basic service set identifier of the second-type communication node,
an allocation duration field, or
a channel bandwidth field.

20. A communication device, comprising a memory and at least one processor, wherein,
the memory is configured to store at least one program; and
the at least one program, when executed by the at least one processor, causes the at least one processor to perform the data transmission method of any one of claims 1 to 13 or the data transmission method of any one of claims 14 to 19.

21. A storage medium having a computer program stored therein, wherein the computer program, when executed by a processor, causes the processor to perform the data transmission method of any one of claims 1 to 13 or the data transmission method of any one of claims 14 to 19.
